# EUROPEAN PATENT SPECIFICATION

(11) **EP 4 553 703 B1**
(45) Date of publication and mention of the grant of the patent: **14.01.2026**
(21) Application number: 24211895.8
(22) Date of filing: 08.11.2024
(51) Int. Cl.: G06N 3/06, G06N 20/00

(54) **APPARATUS AND METHOD FOR OPTIMIZING ARTIFICIAL INTELLIGENCE BASED MODEL**
VORRICHTUNG UND VERFAHREN ZUR OPTIMIERUNG EINES MODELLS AUF BASIS VON KÜNSTLICHER INTELLIGENZ
APPAREIL ET PROCÉDÉ D'OPTIMISATION DE MODÈLE BASÉ SUR L'INTELLIGENCE ARTIFICIELLE

(30) Priority: 10.11.2023 KR 20230154978
(43) Date of publication of application: 14.05.2025
(73) Proprietor: Nota, Inc., Daejeon 34050 (KR)
(72) Inventor: CHOI, Shinkook, Yuseong-gu, Daejeon 193 (KR); BAEK, Jongwon, Yuseong-gu, Daejeon 193 (KR)
(74) Representative: HGF

(56) References cited:
- US-A1- 2023 004 816

## Description

### CROSS-REFERENCE TO RELATED APPLICATIONS

This application claims priority to and the benefit of Korean Patent Application No. 10-2023-0154978 filed in the Korean Intellectual Property Office on November 10, 2023.

### TECHNICAL FIELD

The present disclosure relates to artificial intelligence technology, and more particularly, to optimization technology of an artificial intelligence based model.

### BACKGROUND ART

Due to the development of artificial intelligence technology, various types of artificial intelligence based models are being developed. The demand for computational resources to handle various AI based models is also increasing, and the development of hardware with new abilities in related industries is continuously developed.

As the demand for edge artificial intelligence, which can lead to a direct operation in terminals on networks such as personal computers, smartphones, cars, wearable devices and robots, increases, research into an AI based model considering hardware resources is conducted.

With the development of edge AI technology and as the importance of hardware in the artificial intelligence technology field increases, in order to develop and launch artificial intelligence based solutions, sufficient knowledge of various hardware in which the artificial intelligence based models are to be executed in addition to the artificial intelligence based models is also required. For example, even if there is a model with excellent performance in a specific domain, inference performance for the model can be different for each hardware where the model will be executed. There may also be a situation in which a model with optimal performance in a specific domain is not supported in specific hardware in which a service is to be provided. Accordingly, in order to determine an artificial intelligence based model suitable for the service to be provided and hardware suitable for the artificial intelligence based model, high levels of background knowledge and vast quantities of resources of the artificial intelligence technology and the hardware technology can be required.
US 2023004816A1 relates to methods of optimizing neural network models.

### SUMMARY OF THE INVENTION

The present disclosure has been made in an effort to efficiently optimize an artificial intelligence based model.

An exemplary embodiment of the present disclosure has been made in an effort to efficiently optimize an artificial intelligence based model to be driven in a target device.

Technical objects of the present disclosure are not restricted to the technical object mentioned as above. Other unmentioned technical objects will be apparently appreciated by those skilled in the art by referencing the following description.

The present invention is defined by the independent claims. Further aspects of the present invention are outlined in the dependent claims. An exemplary embodiment of the present disclosure provides a method for optimizing an artificial intelligence based model, which is performed by a computing device. The method may include: obtaining model information corresponding to an artificial intelligence based model, and obtaining target device information corresponding to a target device in which the model is to be executed; obtaining first blocks corresponding to the model by grouping first operators corresponding to the model in units of a block corresponding to a set of one or more operators based on the model information; obtaining second operators which are not supportable by the target device based on the target device information; changing the first blocks corresponding to the model to second blocks corresponding to the model and the target device by changing an operator included in the second operators among the first operators to a replacement operator supportable by the target device; and performing optimization of the model to correspond to the target device based on the second blocks.

In an exemplary embodiment, each of the first blocks and the second blocks may have a structure including a node indicating the operator and an edge indicating a connection between operators.

In an exemplary embodiment, the obtaining of the first blocks may include determining first blocks for covering the first operators corresponding to the model information among blocks in a block pool including a reference block corresponding to a set of predefined operators and a custom block corresponding to a set of operators according to user definition. One block among the first blocks may correspond to a subset of the first operators.

In an exemplary embodiment, each of the second blocks may be constituted only by operators supportable by the target device.

In an exemplary embodiment, the changing of the operator to the replacement operator may include determining an operator type of the operator included in the second operators among the first operators, and changing the operator to the replacement operator by using one change algorithm of a first change algorithm changing an operator by using similarity decision of an output value to an input value, a second change algorithm changing an operator based on whether mathematical results of operations coincide with each other, or a third change algorithm changing an operator based on similarity of mathematical results of operations, based on the determined operator type.

In an exemplary embodiment, the performing of the optimization of the model to correspond to the target device may include determining at least one candidate block by applying filtering criteria using the model information and the target device information to the blocks in the block pool including at least one of the reference block corresponding to the set of the predefined operators or the custom block corresponding to the set of the operators according to user definition, and changing the second blocks to third blocks for increasing optimization efficiency at the target device by replacing at least one of the second blocks with the candidate block based on the comparison between the candidate block and the second blocks.

In an exemplary embodiment, the filtering criteria using the model information and the target device information may include a first filtering criterion for determining a block having an input size or an output size corresponding to an input size or an output size of each of the second blocks constituting the model as the candidate block, and a second filtering criterion for determining a block constituted only by the operators supported in the target device as the candidate block.

In an exemplary embodiment, the comparison between the candidate block and the second blocks may include a comparison between first performance of the candidate block in the target device and second performance of the second blocks in the target device.

In an exemplary embodiment, the first performance and the second performance may include at least one of block latency measured or expected by the target device, block accuracy measured or expected by the target device, or block power consumption measured or expected by the target device.

In an exemplary embodiment, the method may further include determining whether satisfied at least one constraint of a first constraint corresponding to the target device or a second constraint set by a user when the model constituted by the second blocks is executed by the target device. The optimization of the model may be performed to correspond to the target device when it is determined that the constraint is not satisfied.

In an exemplary embodiment, the performing of the optimization of the model to correspond to the target device may include determining at least one candidate block based on target device awareness acquired from the target device information, determining whether to change at least one of the second blocks to the candidate block by performing comparison of scores of the at least one candidate block and the second blocks, and performing the optimization of the model to correspond to the target device based on the determining of whether to change at least one of the second blocks to the candidate block.

In an exemplary embodiment, the method may further include performing retraining for the model by applying feature-level knowledge distillation loss for the block changed to the candidate block among the second blocks.

In an exemplary embodiment, the performing of the optimization of the model to correspond to the target device may include quantizing the model by using a scheme of changing the operator to at least one of a floating point type or an integer type. Here, the quantizing may include determining whether each of blocks to be optimized supports mixed precision, and maintaining an operator in which a quantization error is a first value to have a floating point type and performing quantization to an integer type for an operator in which the quantization error is a second value in the block supporting the mixed precision. Here, the first value is larger than the second value.

In an exemplary embodiment, the method may further include: converting the optimized model to have a runtime supportable by the target device; obtaining a benchmark result generated by executing the converted optimized model in the target device; determining whether the benchmark result satisfies at least one constraint of a first constraint corresponding to the target device or a second constraint set by the user; and determining reperforming of the optimizing of the model to correspond to the target device when it is determined that the benchmark result does not satisfy the at least one constraint.

In an exemplary embodiment, the first blocks or the second blocks may be selectable from a block pool including the reference block corresponding to the set of the predefined operators or the custom block corresponding to the set of the operators according to the user definition. Each of the blocks in the block pool may be defined as metadata indicating a feature of a block or features of operators in the block.

In an exemplary embodiment, the metadata may include an order of operators in the block, a type of each of the operators, input data information of each of the operators, output data information of each of the operators, and a constraint for each of the operators.

In an exemplary embodiment, the metadata may be expressed as a combination of a fixed parameter, a variable parameter, and a constraint parameter. The constraint parameter may include a first constraint parameter according to unique features of the operators in the block or user setting, and a second constraint parameter automatically set depending on the fixed parameter.

In an exemplary embodiment, the performing of the optimization of the model to correspond to the target device may include optimizing the model to correspond to the target device by a scheme of varying or changing a quantitative level of the optimization of the model or a scheme of the optimization of the model based on the constraint parameter.

Another exemplary embodiment of the present disclosure provides a computer program stored in a computer readable storage medium. When the computer program is executed by at least one processor, the computer program may allow at least one processor to perform operations for optimizing an artificial intelligence based model. The operations may include: an operation of obtaining model information corresponding to an artificial intelligence based model, and obtaining target device information corresponding to a target device in which the model is to be executed; an operation of obtaining first blocks corresponding to the model by grouping first operators corresponding to the model in units of a block corresponding to a set of one or more operators based on the model information; an operation of obtaining second operators which are not supportable by the target device based on the target device information; an operation of changing the first blocks corresponding to the model to second blocks corresponding to the model and the target device by changing an operator included in the second operators among the first operators to a replacement operator supportable by the target device; and an operation of performing optimization of the model to correspond to the target device based on the second blocks.

Still another exemplary embodiment of the present disclosure provides a computing device including: at least one processor; and a memory. The at least one processor may be configured to perform an operation of obtaining model information corresponding to an artificial intelligence based model, and obtaining target device information corresponding to a target device in which the model is to be executed; an operation of obtaining first blocks corresponding to the model by grouping first operators corresponding to the model in units of a block corresponding to a set of one or more operators based on the model information; an operation of obtaining second operators which are not supportable by the target device based on the target device information; an operation of changing the first blocks corresponding to the model to second blocks corresponding to the model and the target device by changing an operator included in the second operators among the first operators to a replacement operator supportable by the target device; and an operation of performing optimization of the model to correspond to the target device based on the second blocks.

Yet another exemplary embodiment of the present disclosure provides a method for optimizing an artificial intelligence based model, which is performed by a computing device. The method may include: obtaining model information corresponding to an artificial intelligence based model; obtaining a plurality blocks corresponding to the model by grouping a plurality of operators corresponding to the model in units of a block corresponding to a set of one or more operators; and optimizing the model by using the plurality of blocks corresponding to the model.

According to an exemplary embodiment of the present disclosure, an artificial intelligence based model can be efficiently optimized.

According to an exemplary embodiment of the present disclosure, an artificial intelligence based model can be efficiently optimized to be driven in a target device.

### BRIEF DESCRIPTION OF THE DRAWINGS

FIG. 1 schematically illustrates a block diagram of a computing device according to an exemplary embodiment of the present disclosure.
FIG. 2 illustrates an exemplary structure of an artificial intelligence based model according to an exemplary embodiment of the present disclosure.
FIG. 3 exemplarily illustrates an optimization method of a model according to an exemplary embodiment of the present disclosure.
FIG. 4 exemplarily illustrates an optimization method of a model according to an exemplary embodiment of the present disclosure.
FIG. 5 exemplarily illustrates a change method of an operator and a block according to an exemplary embodiment of the present disclosure.
FIG. 6 exemplarily illustrates a change method of a block according to an exemplary embodiment of the present disclosure.
FIG. 7 exemplarily illustrates a structure of the block according to an exemplary embodiment of the present disclosure.
FIG. 8 exemplarily illustrates an optimization method of a model according to an exemplary embodiment of the present disclosure.
FIG. 9 exemplarily illustrates a change method of a block according to an exemplary embodiment of the present disclosure.
FIG. 10 exemplarily illustrates a definition method of the block according to an exemplary embodiment of the present disclosure.
FIG. 11 exemplarily illustrates metadata of the block according to the exemplary embodiment of the present disclosure.
FIG. 12 is a schematic diagram of a computing environment according to an exemplary embodiment of the present disclosure.

### DETAILED DESCRIPTION

Various exemplary embodiments will now be described with reference to drawings. In this specification, various descriptions are presented to provide appreciation of the present disclosure. Prior to describing detailed contents for carrying out the present disclosure, it should be noted that configurations not directly associated with the technical gist of the present disclosure are omitted without departing from the technical gist of the present disclosure. Further, terms or words used in this specification and claims should be interpreted as meanings and concepts which match the technical features of the present disclosure based on a principle in which the inventor can define appropriate concepts of the terms in order to describe his/her invention by a best method. "Module", "system", and/or "model" which are terms used in the specification refer to a computer-related entity, hardware, firmware, software, and a combination of the software and the hardware, or execution of the software, and can be used interchangeably. For example, the module may be a processing process executed on a processor, the processor, an object, an execution thread, a program, an application, and/or a computing device, but is not limited thereto. One or more modules may reside within the processor and/or a thread of execution. The module may be localized in one computer. One module may be distributed between two or more computers. Further, the modules may be executed by various computer-readable media having various data structures, which are stored therein. The modules may perform communication through local and/or remote processing according to a signal (for example, data transmitted from another system through a network such as the Internet through data and/or a signal from one component that interacts with other components in a local system and a distribution system) having one or more data packets, for example.

The term "or" is intended to mean not exclusive "or" but inclusive "or". That is, when not separately specified or not clear in terms of a context, a sentence "X uses A or B" is intended to mean one of the natural inclusive substitutions. That is, the sentence "X uses A or B" may be applied to any of the case where X uses A, the case where X uses B, or the case where X uses both A and B. Further, it should be understood that the term "and/or" and "at least one" used in this specification designates and includes all available combinations of one or more items among enumerated related items. For example, the term "at least one of A or B" or "at least one of A and B" should be interpreted to mean "a case including only A", "a case including only B", and "a case in which A and B are combined".

It should be appreciated that the term "comprise / include" and/or "comprising / including" means presence of corresponding features and/or components. However, it should be appreciated that the term "comprises / includes" and/or "comprising / including" means that presence or addition of one or more other features, components, and/or a group thereof is not excluded. Further, when not separately specified or it is not clear in terms of the context that a singular form is indicated, it should be construed that the singular form generally means "one or more" in this specification and the claims.

Those skilled in the art need to recognize that various exemplary components described in connection with the exemplary embodiments disclosed herein may be additionally implemented as hardware, computer software, or combinations of both sides.

The description of the presented embodiments is provided so that those skilled in the art of the present disclosure use or implement the present disclosure. Various modifications to the exemplary embodiments will be apparent to those skilled in the art. Generic principles defined herein may be applied to other embodiments without departing from the scope of the present disclosure. Therefore, the present disclosure is not limited to the exemplary embodiments presented herein. The present disclosure should be analyzed within the widest range which is coherent with the principles and new features presented herein.

In the present disclosure terms represented by N-th such as first, second, or third are used for distinguishing at least one entity. For example, entities expressed as first and second may be the same as each other or different from each other.

The term "model" used in the present disclosure may be used as a meaning that encompasses the artificial intelligence based model, the artificial intelligence model, the computation model, the neural network, a network function, and the neural network. In an exemplary embodiment, the model may mean a model file, identification information of the model, an execution configuration of the model, a runtime of the model, and/or a framework of the model.

The term "device" used in the present disclosure may correspond to hardware or hardware identification information in which the model is to be executed. In an additional example, the device may correspond to hardware in which the model is to be executed or hardware identification information. The hardware may be used as a meaning that encompasses physical hardware, virtual hardware, hardware which is impossible to be accessed through the network from the outside, hardware which is impossible to confirm externally, and/or hardware which is confirmed in a cloud. For example, the device in the present disclosure may include various types of hardware such as RaspberryPi, Coral, Jetson-Nano, AVH RasberryPi, and Mobile.

In the present disclosure, the term "acquire" and "obtain" can be used interchangeably.

The term "benchmark" used in the present disclosure may mean an operation of executing or testing the model in the device or an operation of measuring the performance for the device of the model. In an additional exemplary embodiment, the benchmark may also mean an operation of acquiring an expected performance predicted when the model is executed in the device.

A benchmark result or benchmark result information in the present disclosure may include information acquired according to the benchmark or information acquired by processing the information acquired according to the benchmark. In the present disclosure, a benchmark prediction result or benchmark prediction result information may mean a benchmark result predicted when the model is executed in the device. For example, the benchmark prediction result may correspond to a benchmark result acquired without executing the model in the device (that is, without measuring the performance).

An operator in the present disclosure may be used to mean a component constituting the model. For example, one model may include a plurality of operators. For example, the plurality of operators may be connected to each other through an edge. An operation of the model may be performed through operations of the plurality of operators. For example, the operator may be used interchangeably with a node or layer of the model. As an example, a convolutional layer may become an example for the operator in the artificial intelligence model.

In the present disclosure the block may correspond to a set or a combination of one or more operators. The block may be generated by grouping operators. As an example, the block may include a node corresponding to an operator and an edge structure indicating a connection relationship of operators. As an example, the model may include one or more blocks including one or more operators. As an example, one block may represent functional features of the operators included in the block and/or operational features of the operators.

In the present disclosure, "optimization" may mean a methodology applied to the model in order to increase efficiency of an operation of an artificial intelligence model or optimize the artificial intelligence model when the artificial intelligence model is executed in hardware. In an exemplary embodiment, optimization of the model may include a methodology applied to the model in order to increase performance of the model or optimize the model when the model is executed in the hardware. In an exemplary embodiment, the optimization of the model may mean modification, change, or reconfiguration of at least a part of the model in order to increase the performance of the model based on hardware awareness.

In an exemplary embodiment, the optimization of the model may include reducing a size of the model.

In an exemplary embodiment, the optimization of the model may include reducing the number of operators included in the model and/or the number of blocks.

In an exemplary embodiment, the optimization of the model may include increasing or maximizing the efficiency of the operation (e.g., the quantity of used resources and/or an inference speed) of the model in target hardware.

In an exemplary embodiment, the optimization of the model may include lightening and/or compressing the model.

In an exemplary embodiment, the methodology applied to the model may mean, for example, changing. modifying, or reconfiguring at least a part of the model. Various constraints, filtering conditions, and/or performance evaluations may be used for changing, modifying, or reconfiguring at least a part of the model.

In an exemplary embodiment, the optimization of the model may include changing. modifying, or reconfiguring at least a part of the model by considering the hardware. For example, the change of at least a part of the model may include a change for the operator of the model and/or a change for the block of the model.

In an exemplary embodiment, the optimization of the model may indicate weight lightening of the artificial intelligence model. As an example, the optimization may include lightening a capacity or a size of the artificial intelligence model. In an exemplary embodiment, the optimization may indicate compression of the artificial intelligence model.

In an exemplary embodiment, the optimization of the model may include quantization of the artificial intelligence model.

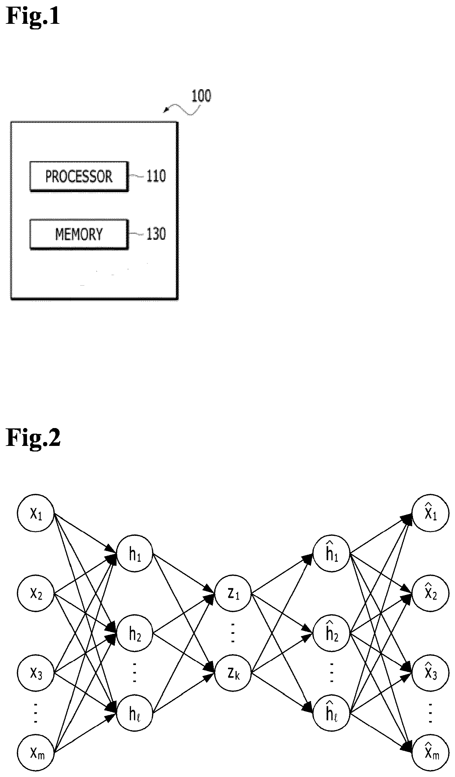

FIG. 1 schematically illustrates a block diagram of a computing device 100 according to an exemplary embodiment of the present disclosure.

According to the exemplary embodiment of the present disclosure, the computing device 100 may include a processor 110 and a memory 130.

A configuration of the computing device 100 illustrated in FIG. 1 is only an example illustrated through simplification. In an exemplary embodiment of the present disclosure, the computing device 100 may include other components for performing a computing configuration of the computing device 100 and only some of the disclosed components may constitute the computing device 100. As an example, when the computing device 100 includes a user terminal, an output unit (not illustrated) and an input unit (not illustrated) may be included in a scope of the computing device 100.

The computing device 100 in the present disclosure may be used as a meaning that encompass any type of server and any type of terminal. The computing device 100 may be used interchangeably with a computing device.

In the present disclosure, the computing device 100 may mean any type of component constituting a system for implementing exemplary embodiments of the present disclosure.

In an exemplary embodiment, the computing device 100 may mean a device for optimizing, changing, substituting, transforming, and/or converting a model input based on device awareness to a model suitable for the device.

In an exemplary embodiment, the computing device 100 may mean a device that performs the optimization and/or benchmark for a plurality of devices of a specified artificial intelligence-based model in communication with a plurality of devices. For example, the computing device 100 may refer to a device for managing a device farm for performing the benchmark. In another example, the computing device 100 may include the device farm.

In an exemplary embodiment, the computing device 100 may mean a device that generates the learning model through modeling for an input dataset, generates an optimized model through optimization (for example, generates a lightweight model through compression) for an input model, and/or generates download data so as to deploy the input model in a specific device. Additionally, the computing device 100 may transform the input model so that the input model is compatible with the specific device. Additionally, the computing device 100 may generate, based on information on an input model or an input device, performance (e.g., prediction performance or actually measured performance) when the corresponding model is executed in the corresponding device.

In the present disclosure, deploy or deployment may mean any type of activity which enables using software (e.g., model). For example, the deploy or deployment may be interpreted as an overall process customized according to specific requirements or characteristics of the model or device. An example for the deploy or deployment may include release, installation and activation, deactivation, removal, update, built-in update, adaptation, and/or version tracking.

In an exemplary embodiment, the processor 110 may perform an overall operation of the computing device 100. The processor 110 may be constituted by at least one core. The processor 110 may include devices for data analysis and/or processing, which include a central processing unit (CPU), a general purpose graphics processing unit (GPGPU), a tensor processing unit (TPU), and the like of the computing device 100.

The processor 110 may read a computer program stored in the memory 130 to convert the model or optimize the model according to an exemplary embodiment of the present disclosure.

According to an exemplary embodiment of the present disclosure, the processor 110 may also perform a computation for learning a neural network. The processor 110 may perform calculations for learning the neural network, which include processing of input data for learning in deep learning (DL), extracting a feature in the input data, calculating an error, updating a weight of the neural network using backpropagation, and the like. At least one of the CPU, GPGPU, and TPU of the processor 110 may process learning of a network function. For example, both the CPU and the GPGPU may process the learning of the network function and data classification using the network function. Further, in an exemplary embodiment of the present disclosure, processors of the plurality of computing devices may be used together to process the learning of the network function and the data classification using the network function. Further, the computer program executed in the computing device 100 according to an exemplary embodiment of the present disclosure may be a CPU, GPGPU, or TPU executable program.

Additionally, the processor 110 may generally process an overall operation of the computing device 100. For example, the processor 110 processes data, information, signals, and the like input or output through the components included in the computing device 100 or drives the application program stored in a storage unit to provide information or a function appropriate for the user.

According to an exemplary embodiment of the present disclosure, the memory 130 may store any type of information generated or determined by the processor 110 or any type of information received by the computing device 100. According to an exemplary embodiment of the present disclosure, the memory 130 may be a storage medium that stores computer software which allows the processor 110 to perform the operations according to the exemplary embodiments of the present disclosure. Therefore, the memory 130 may mean computer-readable media for storing software codes required for performing the exemplary embodiments of the present disclosure, data which become execution targets of the codes, and execution results of the codes. According to an exemplary embodiment of the present disclosure, the memory 130 may mean any type of storage medium, and include, for example, at least one type of storage medium of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The computing device 100 may operate in connection with a web storage performing a storing function of the memory 130 on the Internet. The description of the memory is just an example and the memory 130 used in the present disclosure is not limited to the examples.

In the present disclosure, the communication unit (not illustrated) may be configured regardless of communication modes such as wired and wireless modes and constituted by various communication networks including a personal area network (PAN), a wide area network (WAN), and the like. Further, the network unit 150 may operate based on known World Wide Web (WWW) and may adopt a wireless transmission technology used for short-distance communication, such as infrared data association (IrDA) or Bluetooth.

The computing device 100 in the present disclosure may include any type of user terminal and/or any type of server. Therefore, the exemplary embodiments of the present disclosure may be performed by the server and/or the user terminal.

In an exemplary embodiment, the user terminal may include any type of terminal which is capable of interacting with the server or another computing device. The user terminal may include, for example, a mobile phone, a smart phone, a laptop computer, personal digital assistants (PDA), a slate PC, a tablet PC, and an ultrabook.

In an exemplary embodiment, the server may include, for example, any type of computing system or computing device such as a microprocessor, a mainframe computer, a digital processor, a portable device, and a device controller.

In an exemplary embodiment, the server may store and manage information on operators corresponding to a target device, information on operators corresponding to model information, information on a replacement operator corresponding to the operator, metadata allocated to the block, block-wise structural information, a benchmark result, a benchmark prediction result, and/or performance of devices. For example, the server may include a storage unit (not illustrated) for storing the information. The storage unit may be included in the server, or may be present under the management of the server. As another example, the storage unit may also be present outside the server, and implemented in a form which is capable of communicating with the server. In this case, the storage unit may be managed and controlled by another external server different from the server. As another example, the storage unit may also be present outside the server, and implemented in a form which is capable of communicating with the server. In this case, the storage unit may be managed and controlled by another external server different from the server.

FIG. 2 illustrates an illustrative structure of an artificial intelligence based model according to an exemplary embodiment of the present disclosure.

Throughout the present disclosure, the model, the artificial intelligence model, the artificial intelligence based model, the operation model, and the neural network, the network function, and the neural network may be used interchangeably.

The artificial intelligence based model in the present disclosure may include models which are utilizable in various domains, such as a model for image processing such as object segmentation, object detection, and/or object classification, a model for text processing such as data prediction, text semantic inference and/or data classification, etc.

The neural network may be generally constituted by an aggregate of calculation units which are mutually connected to each other, which may be called "node". The nodes may also be called neurons. The neural network is configured to include one or more nodes. The nodes (or neurons) constituting the neural networks may be mutually connected to each other by one or more links.

The node in the artificial intelligence based model may be used to mean a component that constitutes the neural network, and for example, the node in the neural network may correspond to the neuron.

In the neural network, one or more nodes connected through the link may relatively form a relationship between an input node and an output node. Concepts of the input node and the output node are relative and a predetermined node which has the relationship of the output node with respect to one node may have the relationship of the input node in the relationship with another node and vice versa. As described above, the relationship of the output node to the input node may be generated based on the link. One or more output nodes may be connected to one input node through the link and vice versa.

In the relationship of the input node and the output node connected through one link, a value of data of the output node may be determined based on data input in the input node. Here, a link connecting the input node and the output node to each other may have a weight. The weight may be variable, and the weight may be varied by a user or an algorithm in order for the neural network to perform a desired function. For example, when one or more input nodes are mutually connected to one output node by the respective links, the output node may determine an output node value based on values input in the input nodes connected with the output node and the weights set in the links corresponding to the respective input nodes.

As described above, in the neural network, one or more nodes are connected to each other through one or more links to form the input node and output node relationship in the neural network. A characteristic of the neural network may be determined according to the number of nodes, the number of links, correlations between the nodes and the links, and values of the weights granted to the respective links. For example, when the same number of nodes and links exist and two neural networks in which the weight values of the links are different from each other exist, it may be recognized that two neural networks are different from each other.

The neural network may be constituted by a set of one or more nodes. A subset of the nodes constituting the neural network may constitute a layer. Some of the nodes constituting the neural network may constitute one layer based on the distances from the initial input node. For example, a set of nodes of which distance from the initial input node is n may constitute n layers. The distance from the initial input node may be defined by the minimum number of links which should be passed from the initial input node up to the corresponding node. However, definition of the layer is predetermined for description and the order of the layer in the neural network may be defined by a method different from the aforementioned method. For example, the layers of the nodes may be defined by the distance from a final output node.

In an exemplary embodiment of the present disclosure, the set of the neurons or the nodes may be defined as the expression "layer".

The initial input node may mean one or more nodes in which data is directly input without passing through the links in the relationships with other nodes among the nodes in the neural network. Alternatively, in the neural network, in the relationship between the nodes based on the link, the initial input node may mean nodes which do not have other input nodes connected through the links. Similarly thereto, the final output node may mean one or more nodes which do not have the output node in the relationship with other nodes among the nodes in the neural network. Further, a hidden node may mean not the initial input node and the final output node but the nodes constituting the neural network.

In the neural network according to an exemplary embodiment of the present disclosure, the number of nodes of the input layer may be the same as the number of nodes of the output layer, and the neural network may be a neural network of a type in which the number of nodes decreases and then, increases again from the input layer to the hidden layer. Further, in the neural network according to another exemplary embodiment of the present disclosure, the number of nodes of the input layer may be smaller than the number of nodes of the output layer, and the neural network may be a neural network of a type in which the number of nodes decreases from the input layer to the hidden layer. Further, in the neural network according to yet another exemplary embodiment of the present disclosure, the number of nodes of the input layer may be larger than the number of nodes of the output layer, and the neural network may be a neural network of a type in which the number of nodes increases from the input layer to the hidden layer. The neural network according to still yet another exemplary embodiment of the present disclosure may be a neural network of a type in which the neural networks are combined.

The deep neural network (DNN) may mean a neural network including a plurality of hidden layers other than the input layer and the output layer. When the deep neural network is used, the latent structures of data may be identified. That is, photographs, text, video, voice, protein sequence structure, genetic sequence structure, peptide sequence structure, and/or potential structure of music (e.g., what objects are in the photo, what is the content and emotions of the text, what contents and emotions of the voice, etc.). The deep neural network may include convolutional neural network (CNN), recurrent neural network (RNN), auto encoder, generative adversarial networks (GAN), restricted Boltzmann machine (RBM), deep belief network (DBN), Q network, U network, Siamese network, etc. The description of the deep neural network described above is just an example and the present disclosure is not limited thereto.

The artificial intelligence based model of the present disclosure may be expressed by a network structure of an arbitrary structure described above, including the input layer, the hidden layer, and the output layer.

The neural network which may be used in a clustering model in the present disclosure may be learned in at least one scheme of supervised learning, unsupervised learning, semi supervised learning, or reinforcement learning. The learning of the neural network may be a process in which the neural network applies knowledge for performing a specific operation to the neural network.

The neural network may be learned in a direction to minimize errors of an output. The learning of the neural network is a process of repeatedly inputting learning data into the neural network and calculating the output of the neural network for the learning data and the error of a target and back-propagating the errors of the neural network from the output layer of the neural network toward the input layer in a direction to reduce the errors to update the weight of each node of the neural network. In the case of the supervised learning, the learning data labeled with a correct answer is used for each learning data (i.e., the labeled learning data) and in the case of the unsupervised learning, the correct answer may not be labeled in each learning data. That is, for example, the learning data in the case of the supervised learning related to the data classification may be data in which category is labeled in each learning data. The labeled learning data is input to the neural network, and the error may be calculated by comparing the output (category) of the neural network with the label of the learning data. As another example, in the case of the unsupervised learning related to the data classification, the learning data as the input is compared with the output of the neural network to calculate the error. The calculated error is back-propagated in a reverse direction (i.e., a direction from the output layer toward the input layer) in the neural network and connection weights of respective nodes of each layer of the neural network may be updated according to the back propagation. A variation amount of the updated connection weight of each node may be determined according to a learning rate. Calculation of the neural network for the input data and the back-propagation of the error may constitute a learning cycle (epoch). The learning rate may be applied differently according to the number of repetition times of the learning cycle of the neural network. For example, in an initial stage of the learning of the neural network, the neural network ensures a certain level of performance quickly by using a high learning rate, thereby increasing efficiency and uses a low learning rate in a latter stage of the learning, thereby increasing accuracy.

In learning of the neural network, the learning data may be generally a subset of actual data (i.e., data to be processed using the learned neural network), and as a result, there may be a learning cycle in which errors for the learning data decrease, but the errors for the actual data increase. Overfitting is a phenomenon in which the errors for the actual data increase due to excessive learning of the learning data. For example, a phenomenon in which the neural network that learns a cat by showing a yellow cat sees a cat other than the yellow cat and does not recognize the corresponding cat as the cat may be a kind of overfitting. The overfitting may act as a cause which increases the error of the machine learning algorithm. Various optimization methods may be used in order to prevent the overfitting. In order to prevent the overfitting, a method such as increasing the learning data, regularization, dropout of omitting a part of the node of the network in the process of learning, utilization of a batch normalization layer, etc., may be applied.

According to an exemplary embodiment of the present disclosure, a computer readable medium is disclosed, which stores a data structure including the benchmark result and/or the artificial intelligence based model. The data structure may be stored in a storage unit (not illustrated) in the present disclosure, and executed by the processor 110 and transmitted and received by a communication unit (not illustrated).

The data structure may refer to the organization, management, and storage of data that enables efficient access to and modification of data. The data structure may refer to the organization of data for solving a specific problem (e.g., data search, data storage, data modification in the shortest time). The data structures may be defined as physical or logical relationships between data elements, designed to support specific data processing functions. The logical relationship between data elements may include a connection relationship between data elements that the user defines. The physical relationship between data elements may include an actual relationship between data elements physically stored on a computer-readable storage medium (e.g., persistent storage device). The data structure may specifically include a set of data, a relationship between the data, a function which may be applied to the data, or instructions. Through an effectively designed data structure, a computing device may perform operations while using the resources of the computing device to a minimum. Specifically, the computing device may increase the efficiency of operation, read, insert, delete, compare, exchange, and search through the effectively designed data structure.

The data structure may be divided into a linear data structure and a non-linear data structure according to the type of data structure. The linear data structure may be a structure in which only one data is connected after one data. The linear data structure may include a list, a stack, a queue, and a deque. The list may mean a series of data sets in which an order exists internally. The list may include a linked list. The linked list may be a data structure in which data is connected in a scheme in which each data is linked in a row with a pointer. In the linked list, the pointer may include link information with next or previous data. The linked list may be represented as a single linked list, a double linked list, or a circular linked list depending on the type. The stack may be a data listing structure with limited access to data. The stack may be a linear data structure that may process (e.g., insert or delete) data at only one end of the data structure. The data stored in the stack may be a data structure (LIFO-Last in First Out) in which the data is input last and output first. The queue is a data listing structure that may access data limitedly and unlike a stack, the queue may be a data structure (FIFO-First in First Out) in which late stored data is output late. The deque may be a data structure capable of processing data at both ends of the data structure.

The non-linear data structure may be a structure in which a plurality of data are connected after one data. The non-linear data structure may include a graph data structure. The graph data structure may be defined as a vertex and an edge, and the edge may include a line connecting two different vertices. The graph data structure may include a tree data structure. The tree data structure may be a data structure in which there is one path connecting two different vertices among a plurality of vertices included in the tree. That is, the tree data structure may be a data structure that does not form a loop in the graph data structure.

The data structure may include the neural network. In addition, the data structures, including the neural network, may be stored in a computer readable medium. The data structure including the neural network may also include data preprocessed for processing by the neural network, data input to the neural network, weights of the neural network, hyper parameters of the neural network, data obtained from the neural network, an active function associated with each node or layer of the neural network, and a loss function for learning the neural network. The data structure including the neural network may include predetermined components of the components disclosed above. In other words, the data structure including the neural network may include all of data preprocessed for processing by the neural network, data input to the neural network, weights of the neural network, hyper parameters of the neural network, data obtained from the neural network, an active function associated with each node or layer of the neural network, and a loss function for learning the neural network or a combination thereof. In addition to the above-described configurations, the data structure including the neural network may include predetermined other information that determines the characteristics of the neural network. In addition, the data structure may include all types of data used or generated in the calculation process of the neural network, and is not limited to the above. The computer readable medium may include a computer readable recording medium and/or a computer readable transmission medium. The neural network may be generally constituted by an aggregate of calculation units which are mutually connected to each other, which may be called "node". The nodes may also be called neurons. The neural network is configured to include one or more nodes.

The data structure may include data input into the neural network. The data structure including the data input into the neural network may be stored in the computer readable medium. The data input to the neural network may include learning data input in a neural network learning process and/or input data input to a neural network in which learning is completed. The data input to the neural network may include preprocessed data and/or data to be preprocessed. The preprocessing may include a data processing process for inputting data into the neural network. Therefore, the data structure may include data to be preprocessed and data generated by preprocessing. The data structure is just an example and the present disclosure is not limited thereto.

The data structure may include the weight of the neural network (in the present disclosure, the weight and the parameter may be used as the same meaning). In addition, the data structures, including the weight of the neural network, may be stored in the computer readable medium. The neural network may include a plurality of weights. The weight may be variable and the weight may be varied by a user or an algorithm in order for the neural network to perform a desired function. For example, when one or more input nodes are mutually connected to one output node by the respective links, the output node may determine a data value output from an output node based on values input in the input nodes connected with the output node and the weights set in the links corresponding to the respective input nodes. The data structure is just an example and the present disclosure is not limited thereto.

As a non-limiting example, the weight may include a weight which varies in the neural network learning process and/or a weight in which neural network learning is completed. The weight which varies in the neural network learning process may include a weight at a time when a learning cycle starts and/or a weight that varies during the learning cycle. The weight in which the neural network learning is completed may include a weight in which the learning cycle is completed. Accordingly, the data structure including the weight of the neural network may include a data structure including the weight which varies in the neural network learning process and/or the weight in which neural network learning is completed. Accordingly, the above-described weight and/or a combination of each weight are included in a data structure including a weight of a neural network. The data structure is just an example and the present disclosure is not limited thereto.

The data structure including the weight of the neural network may be stored in the computer-readable storage medium (e.g., memory, hard disk) after a serialization process. Serialization may be a process of storing data structures on the same or different computing devices and later reconfiguring the data structure and converting the data structure to a form that may be used. The computing device may serialize the data structure to send and receive data over the network. The data structure including the weight of the serialized neural network may be reconfigured in the same computing device or another computing device through deserialization. The data structure including the weight of the neural network is not limited to the serialization. Furthermore, the data structure including the weight of the neural network may include a data structure (for example, B-Tree, R-Tree, Trie, m-way search tree, AVL tree, and Red-Black Tree in a nonlinear data structure) to increase the efficiency of operation while using resources of the computing device to a minimum. The above-described matter is just an example and the present disclosure is not limited thereto.

The data structure may include hyper-parameters of the neural network. In addition, the data structures, including the hyper-parameters of the neural network, may be stored in the computer readable medium. The hyper-parameter may be a variable which may be varied by the user. The hyper-parameter may include, for example, a learning rate, a cost function, the number of learning cycle iterations, weight initialization (for example, setting a range of weight values to be subjected to weight initialization), and Hidden Unit number (e.g., the number of hidden layers and the number of nodes in the hidden layer). The data structure is just an example, and the present disclosure is not limited thereto.

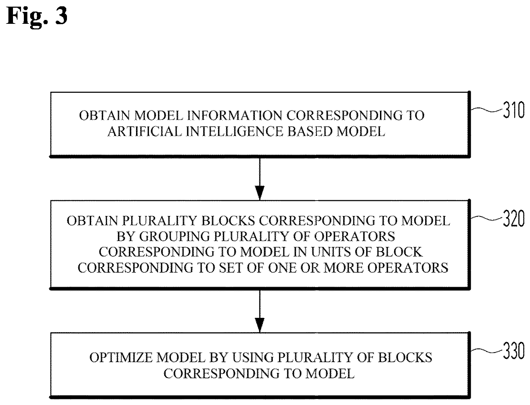

FIG. 3 exemplarily illustrates an optimization method of a model according to an exemplary embodiment of the present disclosure.

As illustrated in FIG. 3, the computing device 100 may obtain model information corresponding to the artificial intelligence based model (310).

In an exemplary embodiment, the model information may include an uploaded model file, identification information for identifying a model, information for identifying a runtime or an execution environment of the model, information for identifying operators include in the model, and/or information for identifying blocks constituting the model. As an example, the model information may be extracted from a user input which uploads the model file.

In an additional example, the model information may include identification information of a model, a name of a model file, an extension of the model file, the model file itself, a software version, a framework, a size of the model, an input shape of the model, a batch size, and/or the number of channels.

In an additional example, the model information may include information indicating an execution configuration of the model, such as Tflite, Onnxruntime, OpenVINO, and Tensorrt. For example, the model information may also include library information or software version information for the execution configuration of the model. In such an example, the model information may be expressed as Python 3.7.3 and pillow 5.4.1 of Tflite.

In an exemplary embodiment, the computing device 100 groups a plurality of operators corresponding to the model in units of a block corresponding to a set of one or more operators to acquire a plurality of blocks corresponding to the model (320).

In an exemplary embodiment, the operators corresponding to the model may include operators included in the model. In an exemplary embodiment, the operators corresponding to the model may include operators constituting the model. In an exemplary embodiment, the blocks corresponding to the model indicate a set of the operators corresponding to the model. In an exemplary embodiment, the set of the blocks may constitute the model. In an exemplary embodiment, the blocks corresponding to the model may include blocks included in the model. In an exemplary embodiment, the blocks corresponding to the model may include blocks changed by considering target device information.

In an exemplary embodiment, the computing device 100 may determine operators included in the artificial intelligence based model based on the model information. For example, the computing device 100 may determine identification information of the operators constituting the model and a connection relationship of the operators by parsing the model file. For example, the operators may include operators pre-stored in response to the model information. For example, it is assumed that the model is constituted by a first operator that performs a first convolutional operation, a second operator that performs a sigmoid operation, a third operator that performs a second convolutional operation, and a fourth operator that performs an Add operation. The computing device 100 may determine a model structure connected to the first operator, the second operator, the third operator, and the fourth operator from the input model information, through parsing for the model.

In an exemplary embodiment, the computing device 100 may group the operators in units of a block indicating a set of one or more operators. For example, the block may refer to a group of one or more operators constituting the model. For example, it is assumed that a specific model is constituted by a first operator that performs a first convolutional operation, a second operator that performs a first sigmoid operation, a third operator that performs a second convolutional operation, and a fourth operator that performs a second sigmoid operation. Under the assumption, the block may correspond to any type of group which can be made by the first operator, the second operator, the third operator, and the fourth operator. As an example, the block may be constituted by one operator of the first operator, the second operator, the third operator, and the fourth operator. As another example, the block may be constituted by a combination of two operators among the first operator, the second operator, the third operator, and the fourth operator. As another example, the block may be constituted by a combination of three operators among the first operator, the second operator, the third operator, and the fourth operator. As another example, the block may be constituted by the first operator, the second operator, the third operator, and the fourth operator. In such examples, when the block includes the plurality of operators, the block may include operators and an edge connecting the operators.

In an exemplary embodiment, the block may be selected from a block pool including a reference block corresponding to a set of predefined operators or a custom block corresponding to a set of operators according to user definition.

In an exemplary embodiment, the computing device 100 may optimize a model using a plurality of blocks corresponding to the model (330).

In an exemplary embodiment, the computing device 100 may optimize a model configured in units of a block in units of the block.

In an exemplary embodiment, the computing device 100 may perform optimization of the block unit as the model is configured in units of the block. For example, the computing device 100 may weight-lighten or compress the model in units of the block, so efficiency for compression may be increased.

In an exemplary embodiment, the computing device 100 may optimize the model configured in units of the block to be suitable for a target device. As a result, a technique according to an exemplary embodiment of the present disclosure may perform optimization (e.g., weight lightening, compression, and/or quantization) for the model according to a limited hardware specification. As an example, the technique according to an exemplary embodiment of the present disclosure selects a most efficient block in the target device among blocks constituted only by operators which are supported in the target device to enhance efficiency for the optimization.

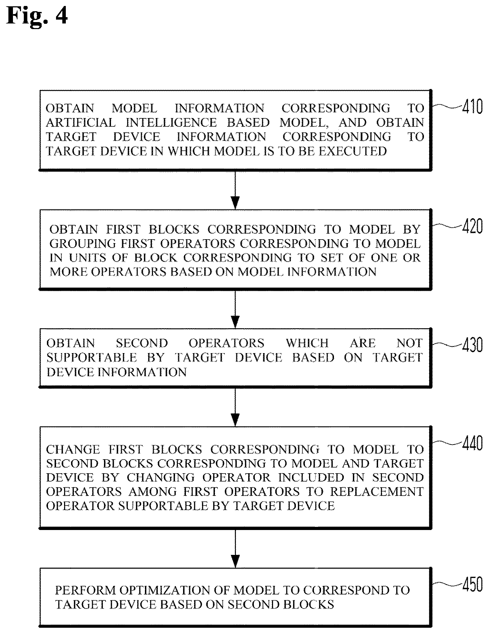

FIG. 4 exemplarily illustrates an optimization method of a model according to an exemplary embodiment of the present disclosure.

In an exemplary embodiment, the computing device 100 may obtain model information corresponding to an artificial intelligence based model, and obtain target device information corresponding to a target device in which the model is to be executed (410).

In FIG. 3, the model information corresponding to the artificial intelligence based model is illustrated, and for simplification of description, description of term model information in FIG. 4 and below will be replaced with the description in FIG. 3.

In an exemplary embodiment, the computing device 100 may acquire the target device information corresponding to the target device in which the model is to be executed jointly with the model information. As an example, in the present disclosure, the target device may refer to a device in which the model is to be executed for performance measurement. As an example, in the present disclosure, the target device may refer to a device in which the model is to be executed or a device designated as the device in which the model is to be executed. As an example, the target device information may include identification information of the target device, runtime information of the target device, software version information related to the target device, software information which is supportable in the target device, and/or an output data type related to the target device. As a non-limited example, the identification information of the target device may be, for example, Jetson Nano, Jetson Xavier NX, Jetson TX2, Jetson AGX Xavier, Jetson AGX Orin, GPU AWS-T4, Xeon-W-2223, Raspberry Pi Zero, Raspberry Pi 2W, Raspberry Pi 3B+, Raspberry Pi Zero 4B, etc.

In an exemplary embodiment, the computing device 100 may provide information for selecting the target device. Information for selecting the target device may include, for example, a candidate device list including a plurality of candidate devices. As an example, the candidate device list may include performance information for each of the candidate devices, performance information when the model is executed in each of the candidate devices, framework information which is supportable in each of the candidate devices, and/or information on operators which are supportable in the candidate devices, respectively.

In an exemplary embodiment, the computing device 100 groups first operators corresponding to the model in units of a block corresponding to a set of one or more operators based on the model information to acquire first blocks corresponding to the model (420).

In an exemplary embodiment, the first blocks may mean blocks constituting an input model. As the first operators included in the model are grouped, the first blocks may be generated. The first block may have a structure including a node indicating the first operator and an edge connecting the first operators.

For example, the computing device 100 may determine first blocks for covering the first operators corresponding to the model information among blocks in a block pool including a reference block corresponding to a set of predefined operators and a custom block corresponding to a set of operators according to user definition. For example, the computing device 100 may store a code or an example model file of the reference block and/or the custom block. The computing device 100 may provide a structure in which the operators in the block are connected by the edge as a form of a graphic user interface (GUI).

For example, the first operators included in the model may be covered through a set of the first blocks. In an exemplary embodiment, one block among the first blocks may correspond to a subset of the first operator. For example, when the number of first operators is 10, a 1-1^{st} block may include two operators, a 1-2^{nd} block may include five operators, and a 1-3^{rd} block may include three remaining operators. As another example, the 1-1^{st} block and the 1-2^{nd} blocks may also be configured to include an overlapped operator with each other.

In an exemplary embodiment, the computing device 100 may acquire second operators which are not supportable in the target device based on the target device information (430).

The computing device 100 divides the model in units of an operator, and determine whether each of the distinguished operators corresponds to a non-supported operator of the target device. For example, the computing device 100 may store a list of supportable operators and a list of operators which are impossible to support with respect to each of the devices. The first operator is executable on a first device, but may not be executed on a second device. When the target device does not support all of various operators, and has a constraint, the corresponding model may not be used as it is. Accordingly, a technique according to an exemplary embodiment of the present disclosure acquires predefined non-supported operators predefined with respect to the target device, and compares the non-supported operators and operators of an input model to process the target device to support the model. That is, in response to an input for the target device, the computing device 100 may compare operators pre-matching the target device and the operators of the model.

In an exemplary embodiment, the computing device 100 changes an operator included in the second operators among the first operators to a replacement operator which is supportable in the target device to change first blocks corresponding to the model to second blocks corresponding to the model and the target device (440).

In an exemplary embodiment, the computing device 100 may determine an operator which is not supported in the target device among the operators constituting the model. The computing device 100 may replace the operator which is not supported in the target device with an operator which is supported in the target device. The computing device 100 may determine an operator most similar to the first operator of the model among the operators which are supported in the target device. A list of the operator which may replace the operator which is not supported in the target device may be predefined and prestored.

In an exemplary embodiment, as the operator which is not supported in the target device is changed to the operator which is supported in the target device in the first block, the first block may be changed to the second block. The second block may be used to refer to a block in which at least some operators in the first block are replaced. The second block may mean a block constituted only by the operators which are supportable in the target device. Only the operators which are supportable in the target device may be included in the second block. The change of the block in the present disclosure may mean that at least some of the components (e.g., operators) constituting the block are changed.

In an exemplary embodiment, the replacement operator is a target to which the first operator constituting the model is to be changed, and the replacement operator may be determined among the operators which are supportable in the target device. For example, the replacement operator is not the same as the first operator, but may be an operator which may similarly perform a function performed by the first operator.

In an exemplary embodiment, the computing device 100 may determine a replacement operator most similar to the first operator among the operators which are supportable in the target device. The replacement operator most similar to the first operator may be determined based on a mathematical operation result of the operator, an input size of the operator, an output size of the operator, an input value of the operator, an output value of the operator, and/or a relationship between previous or post operators of the operator.

In an exemplary embodiment, the computing device 100 may determine an operator having a shape of data input or output by the first operator and data of a shape which is quantitatively replaceable as the replacement operator. For example, it may be confirmed that the first operator to be changed uses data a shape or a size of 64 x 3 x 6 x 6 as input data. In such a case, another operator which has the same size as the input data of the first operator, and performs a function corresponding to the first operator may be determined as a replacement operator which is mutually replaceable with the first operator.

As another example, the computing device 100 may identify a replacement operator having an input attribute with a shape or a size which is replaceable with the input data of the first operator. For example, the computing device 100 may determine an operator having the input attribute with the shape or the size of 32 x 3 x 6 x 6 as the replacement operator which is mutually replaceable (e.g., interchangeable) with the first operator.

In an exemplary embodiment, the computing device 100 may differently perform an operator change scheme according to an operator type corresponding to the first operator to be changed.

In an exemplary embodiment, the computing device 100 may determine an operator type corresponding to the operator included in the second operators which are not supported in the target device among the first operators constituting the model. The computing device 100 may change the operator to the replacement operator by using one change algorithm a first change algorithm changing an operator by using similarity decision of an output value to an input value, a second change algorithm changing the operator based on whether mathematical results of operations coincide with each other, or a third change algorithm changing the operator based on the similarity of the mathematical results of the operations, based on the determined operator type. For example, the operator type may have a plurality of types. The operator type may be classified into an operating unit performed by the operator or a functional unit of the operator. For example, the operator type may include a first operator type indicating an activation operation, a second operator type indicating a simple operation having an operation difficulty below a predetermined level, and a third operator type indicating a layer-related operation other than the simple operation.

In an exemplary embodiment, the first operator type may be allocated to an operator that performs the activation operation. For example, the activation operation may include a Sigmoid related operation, Tanh related operation, a ReLU related operation, an ELU related operation, and/or a Maxout operation.

In an exemplary embodiment, the second operator type may be allocated to an operator that performs a simple operation having a low difficulty (e.g., a difficulty below a predetermined threshold difficulty). For example, the simple operation may include an addition operation, a multiplication operation, and/or a subtraction operation.

In an exemplary embodiment, the third operator type may be allocated to an operator that performs the layer-related operation other than the simple operation. For example, the layer-related operation may include the convolutional operation.

In an exemplary embodiment, when the operator type of the operator to be changed is determined as the first operator type indicating the activation operation, the computing device 100 may change the operator to be changed to the replacement operator based on the first change algorithm changing the operator by using the similarity decision of the output value to the input value. For example, the first change algorithm may perform operator change by using the similarity of the activation operation. The first change algorithm may perform the operator change by using a similarity of the value between an input of the operator and an activation output, a similarity of the input, or a similarity of the activation output. For example, the first change algorithm may determine a target operator (or a target operator having a highest similarity) having a similarity to an activation value of the operator to be changed, which is equal to or more than a predetermined threshold as a target (e.g., the replacement operator) of the change. When the operator to be changed is determined as the first operator type, the computing device 100 may determine, based on the first change algorithm, the replacement operator which becomes the target of the change of the operator to be changed among a plurality of target operators.

In an exemplary embodiment, when the operator type of the operator to be changed is determined as the second operator type indicating the simple operation having an operation difficulty below the predetermined level, the operator may be changed to the replacement operator based on the second change algorithm changing the operator based on whether the mathematical results of the operations are matched.

In an exemplary embodiment, the second change algorithm may include an algorithm for changing the operator to a mathematical or formula corresponding replacement operator. For example, the second change algorithm may include an algorithm for finding the mathematical or formula corresponding or most similar replacement operator. For example, when the operator to be changed is a Pow operator that performs power, the computing device 100 may change the operator to a form of using a plurality of (for example, two) Mul operators that perform the multiplication operation. In an additional example, the change of the operator may be performed additionally based on the user input. For example, if there is an operator designated not to be used by the user, the computing device 100 may perform the operator change based on a replacement operator other than an operator designated by the user.

In an exemplary embodiment, when the operator type of the operator to be changed is determined as the third operator type indicating the layer-related operation other than the simple operation, the computing device 100 may change the operator to the replacement operator based on the third change algorithm changing the operator based on the similarity of the mathematical results of the operations. In an exemplary embodiment, when the operator to be changed is determined as the layer-related operator type, the operator may be changed to an replacement operator that achieves a functionally or mathematically most similar result. For example, in the case of an operator using a filter in which kernel_size of a convolution layer = 6, a first replacement operator utilizing two convolution layers using a filter in which kernel_size = 3 and a second replacement operator using one convolution layer using a filter in which kernel_size = 7 may be considered. When values of one row and one column of the filter in which kernel_size = 7 are changed to 0, a result thereof may be formularly (e.g., mathematically) matched to an original convolution layer. Accordingly, the computing device 100 may determine to change the operator to a second replacement operator using one convolution layer using the filter in which kernel_size = 7 in such an example. In an additional example, the change of the operator may be performed additionally based on the user input. An element which a weight according to the user input may be attached may include the number of layers, kernel_size, strides, and/or pad. For example, when it is determined that a convolution layer having a relatively small kernel_size is selected as the replacement operator according to a priority determined according to the user input, the computing device 100 may determine the first target operator utilizing two convolution layers in which kernel_size = 3 among the first target operator and the second target operator as the change target.

In an exemplary embodiment, the computing device 100 may optimize a model to correspond to the target device based on second blocks (450).

In an exemplary embodiment, the computing device 100 may determine whether to additionally change the second blocks in order to perform more efficient optimization for a model including second blocks changed to an operator which is supportable in the target device.

In an exemplary embodiment, the computing device 100 optimizes the model changed to the second blocks in units of a block. For example, block-unit optimization for the model may be performed based on block-wise performance (e.g., expected performance) of the model including the second blocks.

In an exemplary embodiment, the computing device 100 may check whether the model may operate in the target device under a device constraint or a user constraint. When it is determined that the model may not operate in the target device, the computing device 100 may conduct an optimization and weight lightening task.

In an exemplary embodiment, the computing device 100 may determine whether the model is enabled to operate optimally in the target device under the device constraint or the user constraint. When it is determined that the model may not operate optimally in the target device, the computing device 100 may conduct optimization and weight lightening tasks.

For example, the device constraint may include constraints related to the runtime of the device. For example, the device constraint may include a maximum memory size of the device, a memory size in which the model may be executed, and/or a memory size in which a feature map may be executed. For example, the user constraint may include a condition related to performance for the model and the device when the model is executed. For example, the user constraint may include an inference time set by a user, a memory usage, and/or power consumption.

In an exemplary embodiment, the computing device 100 applies filtering criteria using the model information and the target device information to blocks in a block pool including at least one of a reference block corresponding to a set of predefined operators or a custom block corresponding to a set of operators according to user definition to determine at least one candidate block. For example, the filtering criteria as criteria for filtering the blocks in the block pool may include a filtering criterion using the model information and/or a filtering criterion using the target device information. Through filtering, at least one candidate block may be determined, which becomes a comparison target with the second blocks among the blocks in the block pool. For example, the filtering criteria may include a first filtering criterion for determining a block having an input size or an output size corresponding to an input size or an output size of each of the second blocks constituting the model as a candidate block. For example, the filtering criteria may include a second filtering criterion for determining a block constituted only by operators which are supported in the target device as the candidate block.

In an exemplary embodiment, the computing device 100 replaces at least one of the second blocks with the candidate block based on the comparison between the candidate block and the second blocks to change the second blocks to third blocks for increasing optimization efficiency at the target device. As an example, the change to the third blocks may be included in the optimization of the model. As another example, the computing device 100 may optimize the model to correspond to the target device by applying an optimization algorithm to the third blocks. The optimization algorithm may perform compression, weight-lightening, or quantization for the block. For example, the computing device 100 may perform lightening, compression, and/or quantization for the changed block (e.g., third block).

For example, the computing device 100 compares first performance for the candidate block in the target device and second performance for the second blocks in the target device to change the second blocks to the third blocks. The performance may include block latency measured or expected by the target device, block accuracy measured or expected by the target device, and/or block power consumption measured or expected by the target device.

As described above, the computing device 100 may determine at least one candidate block among the prestored blocks based on target device awareness acquired from the target device information. The computing device 100 compares scores (e.g., a score related to the performance of the block) of the candidate block and the second blocks to determine whether to replace the second block with the candidate block. As the second block is replaced with the candidate block, optimization (e.g., compression, weight-lightening, and/or quantization) performance and efficiency of the model may be enhanced.

In an exemplary embodiment, the computing device 100 replaces a block which is substituted with the operator which is supportable in the target device with a more efficient block in the target device to achieve compression, weight-lightening, and/or quantization of a model optimized to the target device.

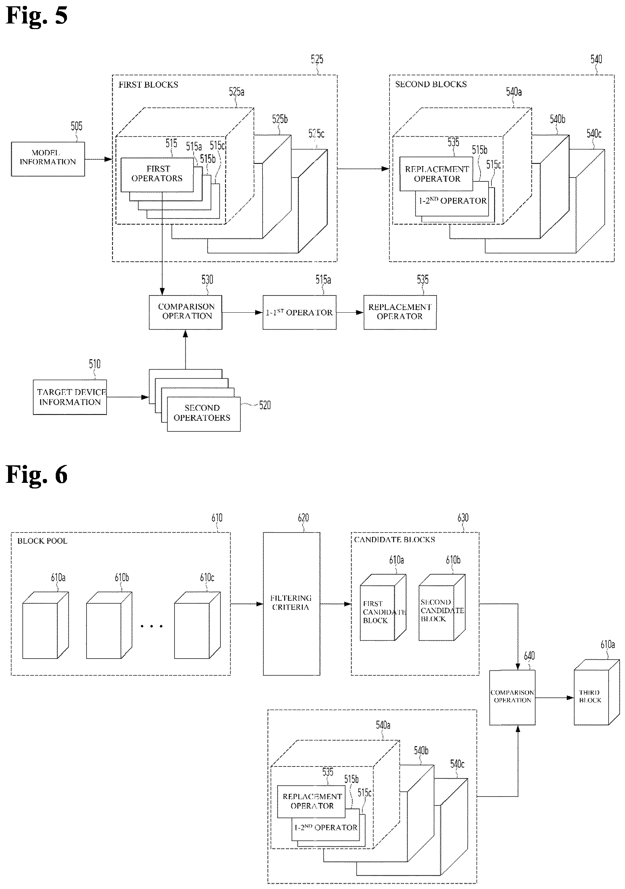

FIG. 5 exemplarily illustrates a change method of an operator and a block according to an exemplary embodiment of the present disclosure.

The change method of the operator and the block in FIG. 5 may be performed by the computing device 100.

As illustrated in FIG. 5, in an exemplary embodiment, model information 505 may be received. In an exemplary embodiment, target device information 510 may be received. The model information 505 and/or the target device information 510 may be acquired by the computing device 100 through a user input. The user input may include an input for executing a specific model in a specific device. The model information 505 corresponding to the specific model and the target device information 510 corresponding to the specific device may be acquired.

In an exemplary embodiment, the computing device 100 may determine operators included in the model corresponding to the model information 505 from the model information 505. The computing device 100 may group the operators included in the model from the model information 505. The computing device 100 may acquire first blocks 525: 525a, 525b, and 525c constituting the model through grouping of the operators. A 1-1^{st} block 525a among the first blocks may include first operators 515:, 515a, 515b, and 515c. Other blocks 525b and 525c among the first blocks may include other operators constituting the model.

In an exemplary embodiment, a list of operators which are not supported in the target device may be acquired from the target device information 510. The list of the unsupported operators corresponding to the target device is expressed as the second operators 520 in FIG. 5.

In an exemplary embodiment, the computing device 100 may compare the operators in the block and the second operators 520 with respect to each of the first blocks 525:, 525a, 525b, and 525c (530). For example, the comparison may include determining whether identifiers of the operators are the same as each other. As another example, the comparison may include determining whether types of operators are the same as each other. As another example, the comparison may also be performed based on input sizes, output sizes, and/or operation schemes of the operators. The computing device 100 compares the first operators 515: 515a, 515b, and 515c and the second operators 520, respectively to determine whether there is an operator included in the second operators 520 among the first operators 515: 515a, 515b, and 515c.

In an exemplary embodiment, the computing device 100 may determine the 1-1^{st} operator 515a included in the second operators 520 according to a result of a comparison operation 530. Here, the 1-1^{st} operator 515a may mean an operator corresponding to one operator among the second operators 520 among the first operators 515 of the 1-1^{st} block 525a. The 1-1^{st} operator 515a may represent an operator included in the model, but an operator which is not supported in the target device.

In an exemplary embodiment, the computing device 100 may change the 1-1^{st} operator 515a to a replacement operator 535 which is the operator supportable in the target device. According to such a change, the 1-1^{st} operator 515a among the first operators 515 in the 1-1^{st} block 525a may be replaced with the replacement operator 535.

In an exemplary embodiment, as 1-1^{st} operator 515a is replaced with the replacement operator 535, a configuration in the block of the first blocks 525 may be changed. As the configuration in the block of the first blocks 525 is changed, the first blocks 525 may be changed to second blocks 540. As illustrated in FIG. 5, the second blocks 540: 540a, 540b, and 540c may be configured by a combination of the operators included in the model and the replacement operators. As an example, a 2-1^{st} block 540a among the second blocks 540 may include the replacement operator 535 with which the 1-1^{st} operator 515a is replaced, a 1-2^{nd} operator 515b, and a 1-3^{rd} operator 515c. A 2-1^{st} block 540a may have a form in which the specific operator is changed in the 1-1^{st} block 525a.

By the above-described scheme, the computing device 100 changes the operators included in the model to be suitable for the target device by reflecting both the model information 505 and the target device information 510 to allow the model to be optimally executed in the target device. The computing device 100 changes the blocks included in the model to be suitable for the target device by reflecting both the model information 505 and the target device information 510 to allow the model to be optimally executed in the target device.

FIG. 6 exemplarily illustrates a change method of a block according to an exemplary embodiment of the present disclosure.

The change method of the operator and the block in FIG. 6 may be performed by the computing device 100.

As illustrated in FIG. 6, in an exemplary embodiment, a filtering criterion 620 may be applied to a block pool 610 including a plurality of blocks 610a, 610b, and 610c. As the filtering criterion 620 is applied, at least some of the blocks 610a, 610b, and 610c included in the block pool 610 may be excluded. As the filtering criterion 620 is applied to the block pool 610, candidate blocks 630: 610a and 610b may be acquired. In the example in FIG. 6, as the filtering criterion 620 is applied, a block corresponding to reference numeral 610c among the blocks 610a, 610b, and 610c of the block pool 610 is excluded. Further, in the example in FIG. 6, as the filtering criterion 620 is applied, blocks corresponding to reference numeral 610a and 610b among the blocks 610a, 610b, and 610c of the block pool 610 are determined as the candidate blocks.

In an exemplary embodiment, the blocks 610a, 610b, and 610c included in the block pool 610 may include predetermined blocks. For example, the blocks 610a, 610b, and 610c included in the block pool 610 may include blocks predefined by the device and blocks defined by the user through the combination of the operators.

In an exemplary embodiment, the filtering criterion 620 may represent a criterion used for changing the second blocks 540 of the model to a more efficient block before optimizing the model in units of the block. For example, the filtering criterion 620 may include a first filtering criterion for determining a block having an input size or an output size corresponding to an input size or an output size of each of the second blocks 540 constituting the model as the candidate block, and/or a second filtering criterion for determining a block constituted only by the operators supported in the target device as the candidate block.

In an exemplary embodiment, the block pool 610 is constituted by a predefined block and a custom block. For the block pool 610, the computing device 100 may filter the blocks constituted by the operators supported in the target device. The computing device 100 may filter a block having the same size as an input feature map size and an output feature map size for each of the second blocks 540: 540a, 540b, and 540c constituting the model on the block pool 610. Blocks to which such secondary filtering is applied may be determined as candidate blocks 630. The computing device 100 may determine a score of each of the candidate blocks 630 and a score of each of the existing second blocks 540. Here, the score may include a score related to the performance of the block. For example, the score related to the performance may include accuracy, an inference time, a memory usage, and/or power consumption. For example, the score may be calculated through a combination of factors related to the performance. The performance may include block-wise performance. The computing device 100 may perform a comparison operation 640 between the candidate blocks 630 and the second blocks 540. When the score of the candidate block is larger than the score of the second block, the computing device 100 may replace the corresponding second block with the corresponding candidate block. When the second block is replaced with a specific candidate block 610a, the replaced block may be referred to as a third block 610a.

By the above-described scheme, the technique according to an exemplary embodiment of the present disclosure may additionally compare a block replaced to be suitable for the target device with the candidate block in the block pool. As a result, a model of a form which is more efficiently executable and optimizable in the target device may be acquired.

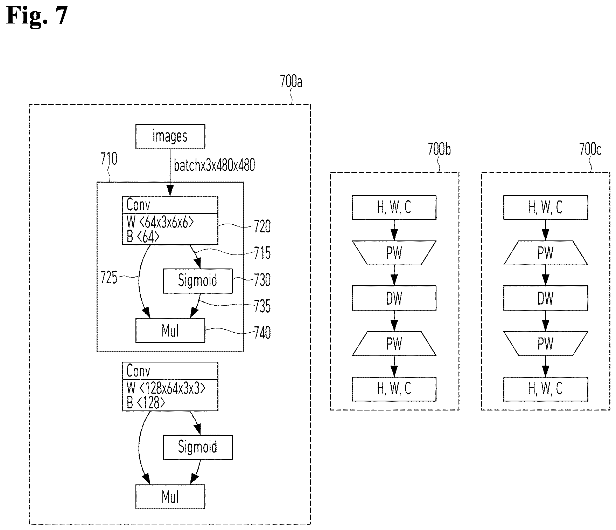

FIG. 7 exemplarily illustrates a structure of the block according to an exemplary embodiment of the present disclosure.

The structure of the blocks illustrated in FIG. 7 is exemplary, and a combination of various types of operators may be formed by the block.

Reference numeral 700a represents an exemplary structure of an input model. FIG. 7 illustrates a block 710 constituted by a first operator 720, a second operator 730, a third operator 740, a first edge 715, a second edge 725, and a third edge 735. The block 710 is an exemplary structure, and other operators (a Convolutional operator and/or a Sigmoid operator) in reference numeral 700a may also form a separate block or be added to the block 710. As an example, the model 700a may be constituted by the block 710, and a block (not illustrated) constituted by the Convolutional operator, the Sigmoid operator, and a Multiply operator.

In an exemplary embodiment, it may be checked whether each of the operators 720, 730, and 740 included in the block 710 is the operator which is not supported in the target device. As a result, the operator which is not supported in the target device may be replaced with the operator which is supported in the target device. According to the replacement of the operator, a configuration of the operators constituting the block 710 may be changed. Further, in order to implement block-wise optimization, the technique according to an exemplary embodiment of the present disclosure may determine the candidate block by applying the filtering criterion in the block pool. For example, a block having a size corresponding to a size (e.g., W is 64 x 3 x 6 x 6 and B is 64) of input data of the block 710 of the model 700a may be determined as the candidate block.

Intermediate Representation(IR) expressing the artificial intelligence based model defines the model by consecutive operators other than the block unit. As a result, a procedure of reconfiguring the operator in units of the block is required to accurately determine the configuration of the model from the IR.

In an exemplary embodiment, each of reference numerals 700b and 700c represent a predefined block. Reference numeral 700b represents a bottleneck type block having a form in which a first pointwise convolutional operator, a depthwise convolutional operator, and a second pointwise convolutional operator are sequentially connected, and a size of an intermediate feature map is reduced.

Reference numeral 700c represents an inverted bottleneck type block. The block 700c may have a structure in which the first pointwise convolutional operator, the depthwise convolutional operator, and the second pointwise convolutional operator are sequentially connected. The block 700c is a block having a form in which the size of the intermediate feature map is expanded. When operator-unit optimization is applied to the block 700c, the first pointwise convolutional operators is weight-lightened while a principle in which the intermediate feature map of the inverted bottleneck becomes larger is not considered, the corresponding block 700c is changed to a bottleneck type block 700b. Likewise, an operator-level optimization technique may cause a problem which leads to changing a unique feature of the model or the block. However, when the model is reconfigured in units of the block and the model is compressed in units of the block, compression may be performed in a state in which an intention of the model or the block is conserved.

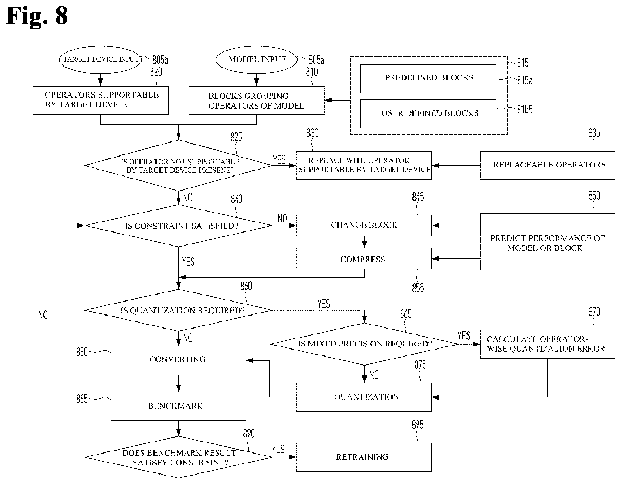

FIG. 8 exemplarily illustrates an optimization method of a model according to an exemplary embodiment of the present disclosure.

The optimization method of the model illustrated in FIG. 8 may be performed by the computing device 100, for example.

Features corresponding to the features described above in the previous drawings among detailed features for the model optimization method in FIG. 8 will be omitted for simplification of the description.

In an exemplary embodiment, the computing device 100 may receive a model input 805a. The computing device 100 may receive a target device input 805b. For example, the computing device 100 may acquire both the model input 805a and the target device input 805b.

In an exemplary embodiment, the computing device 100 may generate or acquire blocks acquired by grouping the operators of the model based on the model input 805a (810). The computing device 100 parses information related to a model included in the model input 805a to determine the operators constituting the model, and group the operators into one or more blocks based on a predetermined grouping scheme. As an example, the predetermined grouping scheme may include a grouping scheme designated in a user input and/or a grouping scheme using blocks included in a predefined block pool. In an additional exemplary embodiment, the model input 805a may include identification information for the operators constituting the model. As a result, the computing device 100 may group the operators into one or more blocks based on the identification information for the operators constituting the model.

**In** an exemplary embodiment, the computing device 100 may group the operators constituting the model by using a block pool 815 including predefined blocks 815a and/or user defined blocks 815b. For example, the predefined blocks 815a may include blocks in which a frequency used in multiple models is equal to or more than a specific frequency. For example, the predefined blocks 815a may include a set of operators requisitely used for achieving functions of the artificial intelligence based model, such as segmentation, detection, prediction, and/or classification, and/or a modified set thereof. For example, the user defined blocks 815b may include custom blocks generated by the user. For example, the custom block may be stored in the block pool 815 as a code of the block or an example model file is input.

For example, the computing device 100 may determine 10 operators constituting the model. A first operator, a second operator, and a tenth operator among 10 operators may correspond to a predefined first block, a third operator, a fourth operator, a fifth operator, and a sixth operator among 10 operators may correspond to a predefined second block, and a seventh operator among 10 operators may correspond to a predefined third block. **In** such a situation, the computing device 100 may determine a first block, a second block, and a third block as the blocks constituting the model. Further, since an eighth operator and a ninth operator among 10 operators are not included in the predefined blocks 815a, a fourth block which is a set of the eighth operator and the ninth operator may be generated through a user's additional input. Further, the fourth block may be automatically generated by the computing device 100. As a result, the computing device 100 may group 10 operators of the model into the first block, the second block, the third block, and the fourth block.

**In** an exemplary embodiment, the computing device 100 may determine operators 820 supportable by the target device based on the target device input 805b. **In** an additional exemplary embodiment, the computing device 100 may determine operators not supported by the target device based on the target device input 805b. **In an** exemplary embodiment, operators not supported by the device may be stored in a device unit registered in the computing device 100.

**In** an exemplary embodiment, the computing device 100 may determine whether there is the operator not supported in the target device among the operators constituting the model (825). The computing device 100 may determine whether the operator included in the model is present in the list of the operators which are not supported by the target device. The computing device 100 may determine an operator which is not present in the list of the operators supportable by the target device among the operators included in the model as the operator not supportable by the target device. **In** an exemplary embodiment, the operator not supportable by the target device may be replaced with the operator supportable by the target device (830). The computing device 100 changes the operator not supportable by the target device to the operator supportable by the target device by using predefined replaceable operators 835. For example, a list of replaceable operators may be stored in units of the operator. Among replaceable operators corresponding to a specific operator, the operator supportable by the target device may be determined. Based on a comparison between the list of the replaceable operators corresponding to the specific operator and the list of the operators supportable by the target device, the specific operator may be replaced or substituted.

In an exemplary embodiment, the computing device 100 may determine whether the blocks of the model satisfy a constraint when the operator not supportable by the target device is not present among the operators of the model (840). **In** an exemplary embodiment, the computing device 100 may change the operator not supportable by the target device among the operators of the model to the replacement operator (that is, change the block), and then determine that all of operators of the model including the replacement operator are supportable by the target device, and determine whether the blocks of the model satisfy the constraint (840). The computing device 100 may determine whether the blocks constituting the model satisfy the constraint in order to determine a most efficient block in the target device among blocks constituted only by operators supported by target hardware.

For example, the computing device 100 may determine whether the model is capable of efficiently operating in the target device under a device constraint or a user constraint, and conduct optimization of the model when the model is not capable of efficiently operating. The computing device 100 may replace a block replaced with the operator supported by the target device with a more efficient block in the target device.

For example, the computing device 100 may use a prestored block pool in order to perform a method for selecting and replacing the more efficient block in the target device. The blocks in the block pool may be constituted by a predefined block and a custom block. The computing device 100 may primarily acquire blocks constituted by the operators supported by the target device among the blocks. That is, blocks not constituted by the operators supported by the target device among the blocks in the block pool may be excluded from a primary filtering process. The computing device 100 may secondarily acquire blocks having sizes corresponding to input feature map sizes and output feature map sizes of blocks at respective locations, which constitute the model among primarily filtered blocks. That is, blocks which do not have a shape or a size corresponding to the block of the model may be excluded from a secondary filtering process.

The computing device 100 may calculate a score for each of the blocks passing through primary filtering and secondary filtering, and calculate a score for each of the blocks included in the model. When the score of the blocks passing through the filtering is larger than the score of the block included in the model, the computing device 100 may replace the block of the model with the block passing through the filtering.

In an exemplary embodiment, the score may represent a quantitative value related to the performance of the block.

In an exemplary embodiment, the score may represent a quantitative value determined based on a block latency, block power consumption, a block memory usage, and/or block accuracy in the target device. For example, the block latency represents time information required for performing the operation of the block by the target device. For example, the block power consumption represents the amount of power used in the target device to perform the operation of the block. For example, the block memory usage represents the amount of memory used in the target device to perform the operation of the block. For example, the block accuracy is information related to accuracy of a result of the operation of the block, and for example, the block accuracy may include accuracy information related to TP, TN, FP, FN, etc., precision information called Precision, specificity information called Specificity, and/or performance evaluation information such as an F1 score, MSE, RMSE, MAE, and MAPE.

In an exemplary embodiment, the performance of the block may be determined according to a score of efficiency using a combination of latency, accuracy, memory usage, and power consumption. The computing device 100 acquires a result of performing performance prediction (850) of the model or block to determine whether to change the block of the model. The performance of the block may be determined based on a benchmark result acquired as the model is executed in the target device.

In an exemplary embodiment, the computing device 100 may perform block change (replacement) when it is determined that the constraint is not satisfied (845). Determining whether the constraint is satisfied or not is an optional feature, and thus performing the block change (replacement) can be done without considering the constraint. As described above, whether to change the block may be determined based on a result of comparing the performance of the candidate block and the performance of the block of the model. That is, when the performance of the candidate block is better than the performance of the block of the model, the block change (replacement) can be performed without determining whether the constraint is satisfied or not.

The computing device 100 may perform optimization for the changed block. The computing device 100 may perform compression or weight-lightening for the changed block (855). The optimization (for example, compression or weight-lightening) is performed in units of the block of the model. For example, the computing device 100 may weight-lighten the model or the block by using a technique such as pruning and/or filter decomposition to be suitable for the target device. According to a unique feature of the block, the first block among the blocks included in the model may be identified as a compressible block, and the second block among the blocks included in the model may be identified as an incompressible block. The computing device 100 compresses the model in which the block is changed in units of the block to allow an input model to optimally operate in the target device. As an example, an expression optimally operating may mean that optimal performance may be achieved when the model is executed in the target device. As a result, the technique according to an exemplary embodiment of the present disclosure sets the performances of the block as multi-objectives to optimize the model based on hardware awareness.

In an additional exemplary embodiment, when it is determined that the constraint is satisfied, the computing device 100 may also perform compression for the model without changing the block.

In an exemplary embodiment, the computing device 100 may determine whether quantization of the model or the compressed model is required (860). When it is determined that the quantization is required, the computing device 100 may apply the quantization to the model or the compressed model. That is, when the model satisfy the constraint in step 840, the quantization may be applied to the model of which the second block is not replaced with a candidate block. In the optimization method of a model, each of determining whether quantization of the model is required and applying the quantization to the model or the compressed model is an optional step. That is, the optimization method of a model may finalize optimization of the model after the first blocks are changed to the second blocks in step 440 or step 830 and then at least one of the second blocks is replaced with at least one candidate block from a block pool in step 845. When it is determined that the quantization is required, the computing device 100 may determine whether the corresponding model or the corresponding block supports mixed precision to jointly use float and integer. The computing device 100 may determine whether the mixed precision of the corresponding model or the corresponding block is required (865). When it is determined that the corresponding model or the corresponding block supports the mixed precision or the mixed precision is required, the computing device 100 may calculate a quantization error for each of the operators (870), and maintain a floating point for an operator in which the quantization error is equal to or more than a specific number, and perform integer quantization for the remaining blocks (875). The computing device 100 may also calculate the quantization error for each of the blocks, and maintain the floating point for the block in which the quantization error is equal to or more than the specific number, and perform the integer quantization for the remaining blocks.

When the mixed precision is not required, quantization for the block itself or quantization for the model itself other than the operator unit may be performed.

**In** an exemplary embodiment, the computing device 100 may perform converting for the model (880). The computing device 100 may convert the model into a type (e.g., TFLite) of a model driven in the target device. For example, in spite of a set of operators that perform the same function or operation, operators which are drivable in an execution environment or a runtime not supported by the target device may not be executed in the target device. Accordingly, the computing device 100 may perform converting of changing the execution environment of the model to the execution environment supportable by the target device. For example, an execution environment corresponding to tensorrt may be changed to an execution environment corresponding to onnxruntime through converting. For example, the artificial intelligence based model may be converted into a model suitable for the target device by using a docker image of a converter corresponding to converter identification information on a virtual operating system. For example, an entity (e.g., a converter server or the computing device 100) performing converting acquires a Docker image corresponding to input converter identification information, and executes an sh file of the converter in the Docker to perform converting of the model. Here, the sh file may represent a file including instructions to be executed in the Docker.

**In** an exemplary embodiment, the computing device 100 may perform a benchmark which executes the converted model in the target device (885). As an example, the benchmark may be performed by another entity outside the computing device 100,, and the computing device 100 may acquire a benchmark result acquired by executing the converted model in the target device. The benchmark result may include various types of performance information such as latency, power consumption, memory usage, and/or accuracy.

In an exemplary embodiment, the computing device 100 may determine whether the benchmark result satisfies a constraint (890). For example, here, the constraint may correspond to the constraint in step 840. For example, the device constraint may include constraints related to the runtime of the device. For example, the device constraint may include a maximum memory size of the device, a memory size in which the model may be executed, and/or a memory size in which a feature map may be executed. For example, the user constraint may include any type of constraint input from the user. As an example, the user constraint may include a condition related to performance for the model and the device when the model is executed. For example, the user constraint may include an inference time set by a user, a memory usage, and/or power consumption.

In an exemplary embodiment, the computing device 100 may perform a task for the block change by returning to steps 840 and 845 when it is determined that the constraint is not satisfied.

In an exemplary embodiment, the computing device 100 may perform retraining the model when it is determined that the constraint is satisfied (895). When the blocks constituted by the operators included in the model input 805a are substituted (for example, when the substitution in step 830 and/or the substitution in step 845 is made), retraining for the model may be required based on the substituted operator or block. As a result, the computing device 100 may perform retraining by adding feature-level knowledge distillation loss to a substituted part (for example, the substituted operator or the substituted block).

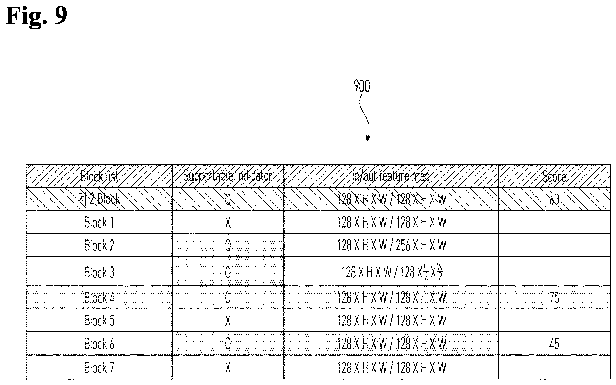

FIG. 9 exemplarily illustrates a change method of a block according to an exemplary embodiment of the present disclosure.

In FIG. 9, an exemplary table 900 of filtering the blocks in the block pool and performing performance comparison between the filtered block and the block of the model is illustrated.

In the table 900 of FIG. 9, a list of a total of 7 blocks is expressed. Block 1, Block 2, Block 3, Block 4, Block 5, Block 6, and Block 7 are blocks stored in the block pool. Further, a second block of the table 900 of FIG. 9 may represent a block corresponding to an input model. The second block may mean a block constituting the input model or a block in a state in which a specific operator is replaced in the input model.

In an exemplary embodiment, first filtering and second filtering may be applied to the blocks included in the block pool. For example, the first filtering may include filtering performed based on whether the block is supportable by the target device. For example, the second filtering may include filtering based on a similarity to sizes of input and/or output feature maps of the second block. In an exemplary embodiment, the first filtering and the second filtering may be applied in parallel or applied in sequence.

In a situation of finding a model which satisfies a specific condition through an NAS technique, when the model is determined according to an operator constituting a search space, a new type of block is proposed, so the search space should be reconfigured, and supernet should be learned again. In this case, there may be a situation in which the target device does not support all of the various operators. Further, when there is a constraint related to the target device or the user, the corresponding model may not be used as it is. In the technique according to an exemplary embodiment of the present disclosure, in a situation in which any model is to be driven in target hardware, optimization may be performed according to a limited hardware specification. Even though any model is input with respect to a target device analyzed in advance, the model may be efficiently driven in the target device through modification and weight-lightening steps of the model.

As illustrated in FIG. 9, Block 4 and Block 6 among the blocks included in the block pool may correspond to candidate blocks passing through the first filtering and the second filtering.

When the candidate blocks are determined, the computing device 100 may calculate scores for the candidate blocks and a score for the second block of the model. When the score of the second block of the model is the larger, the second block of the model may not be changed. In the example of FIG. 9, since a score (75) of Block 4 is larger than a score (60) of the second block of the model, the second block may be changed to Block 4. Since a score (45) of Block 6 is smaller than the score (60) of the second block, Block 6 is selected as the candidate block, but will not become a change target of the second block. As an example, a block having a largest score among the selected candidate blocks and the second block of the model may be compared.

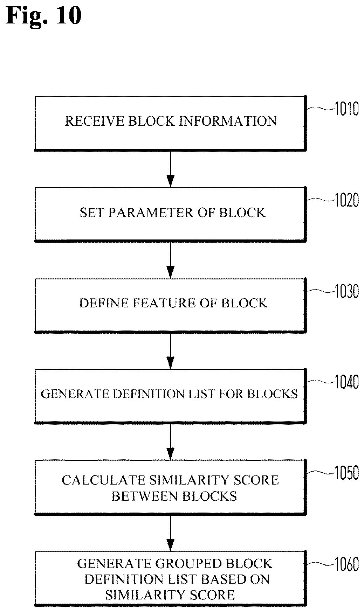

FIG. 10 exemplarily illustrates a definition method of the block according to an exemplary embodiment of the present disclosure.

A definition method of an exemplary block illustrated in FIG. 10 may be performed by the computing device 100, for example.

In an exemplary embodiment, the computing device 100 may receive block information (1010).

For example, when the block information is received, a block corresponding to the block information may be stored in the block pool as a reference block corresponding to a set of predefined operators or a custom block corresponding to a set of operators according to user definition.

For example, the computing device 100 may acquire a model file or code corresponding to the custom block.

In an exemplary embodiment, the computing device 100 may set a parameter of the block (1020).

In an exemplary embodiment, the computing device 100 analyzes operators in an acquired block to express the acquired block as metadata including a fixed parameter and a variable parameter. The parameter may be automatically set according to the operators in the block or manually set according to a user input. For example, when blocks which have a combination of the same operators, but have different activation functions are received, activation related information may be set to the variable parameter and the remaining information may be set to the fixed parameter.

In an exemplary embodiment, the computing device 100 may provide block information indicating the fixed parameter and the variable parameter for the block to be distinguished from each other. For example, colors and/or outer shapes of the fixed parameter and the variable parameter of the block may be expressed differently from each other.

In an exemplary embodiment, the computing device 100 may define a feature of the block or receive an input of defining the feature of the block (1030).

For example, information for defining the unique feature of the block may be expressed as a constraint, and information related to the constraint may also be included in the metadata representing the block. Defining such a unique feature may be automatically set based on information included in the block or manually set according to the user input.

For example, a constraint parameter may include a first constraint parameter according to unique features of the operators in the block or user setting, and/or a second constraint parameter automatically set depending on the fixed parameter. For example, the second constraint parameter automatically set depending on the fixed parameter may include compression related limit information according to the fixed parameter such as a kernel of the block and operator information.

In an exemplary embodiment of the present disclosure, the computing device 100 may optimize the model to correspond to the target device by a scheme of varying or changing a quantitative level of the optimization of the model or a scheme of the optimization of the model based on the information (e.g., the constraint parameter) included in the metadata. As an example, the quantitative level of the model optimization may include a compression rate and/or a compression ratio related to compression of the model. As an example, varying or changing the optimization scheme of the model may be related to exclusion or determination of the compression scheme of the model.

In an exemplary embodiment, if the form of the block is similar to a form after filter decomposition, a filter decomposition method should not be applied to the corresponding block. For example, a block in which pointwise convolution with kernel = 1,1 is continued may have a similar form to Singular Value Decomposition (SVD). Accordingly, a constraint that weight-lightening through the filter decomposition method should not be applied to an operator related to the pointwise convolution of the block may be (automatically) set.

In an exemplary embodiment, when outputs of two convolution operators should be concatenated, a ratio for the number of channels between two outputs should be maintained. As a result, when there is an operator that concatenates the outputs of two convolution operators in a specific block, a constraint that structured pruning should not be excessively applied only to one convolution operator may be (automatically) set. For example, when there is an operator which is Concat(conv1, conv2), it is assumed that the numbers of output channels of conv1 and conv2 are determined as conv1_cout = 128 and conv2_cout = 128. In such a case, upon applying the structured pruning to the corresponding block, a similar pruning ratio may be applied to the conv1 operator and the conv2 operator so that the structured pruning is not excessively applied only to conv1, and a predetermined ratio is maintained (for example, a ratio of conv1 cout : conv2_cout2 = 1:1 is maintained).

In an exemplary embodiment, the computing device 100 may generate a definition list for blocks (1040).

The definition list for the blocks may correspond to a list of metadata for defining each of a plurality of blocks.

The definition list for the blocks may also be expressed as the form for the blocks illustrated in FIG. 7.

In an exemplary embodiment, the computing device 100 may calculate a similarity score between blocks (1050). In an exemplary embodiment, the computing device 100 may generate a grouped block definition list based on the similarity score (1060). The computing device 100 may group and manage blocks within a threshold similarity range by using a similarity between parameters and/or a similarity between constraints between the blocks.

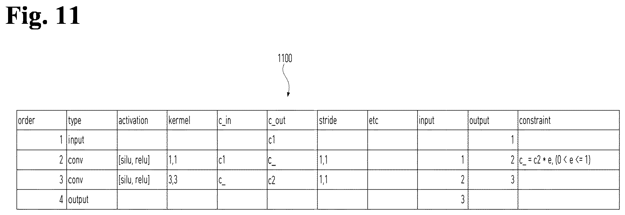

FIG. 11 exemplarily illustrates metadata 1100 of the block according to the exemplary embodiment of the present disclosure.

In an exemplary embodiment, the metadata 1100 of the block may have the same table structure having a form illustrated in FIG. 11. The metadata 1100 may include an order of operators in the block, a type of each of the operators, input data information of each of the operators, output data information of each of the operators, and/or a constraint for each of the operators.

For example, the order of the metadata 1100 may indicate a connection order of the operators. A number of the order may become smaller as being close to an input operator of the model. Activation of the metadata 1100 may be indicated in an operator including an activation related operation. Kernel of the metadata 1100 may include information related to a size and/or a shape of the kernel. c_in of the metadata 1100 indicates channel input and c_out indicates channel output. For example, c_in may indicate an input feature map of the operator, and c_out may mean a channel of an output feature map of the operator.

For example, in the case of convolution in order 2 of FIG. 11, a channel direction size of the input feature map may be c1, and a channel direction size of the output feature map after performing a convolution operation may be c_.

Stride of the metadata 1100 may indicate a quantitative value of stride. In the metadata 1100, input and output may be used for expressing a connectivity between the operators. For example, an output of order 1 may have a value (e.g., the same value as) corresponding to an input of order 2, and this may indicate that order 1 and order 2 are connected to each other. Constraint of the metadata 110 indicates a constraint parameter for the block. For example, the inverted bottleneck block 700b in FIG. 7 is a block having a form in which the intermediate feature map becomes larger. A constraint parameter for the block 700b may be set to a constraint parameter that the size of the intermediate feature map is larger than the size of the input feature map and the size of the output feature map by considering a structural feature of the block 700b. Further, when optimization (for example, structured pruning) is applied to the corresponding block 700b, a pruning ratio may be adjusted so as to prevent c_from being smaller than c1 and c2.

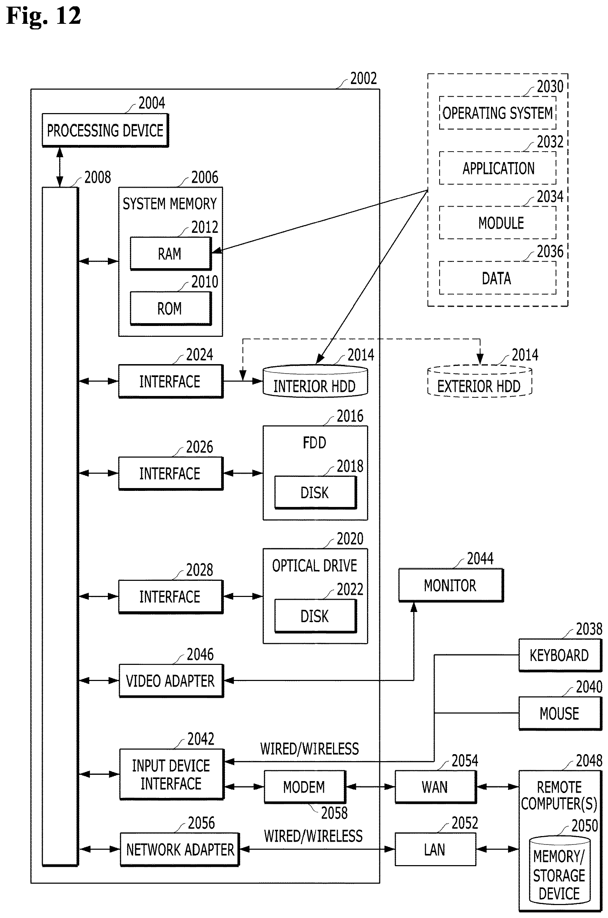

FIG. 12 is a schematic view of a computing environment of the computing device 100 according to an exemplary embodiment of the present disclosure.

**In** the present disclosure, the computing device, the computer, the system, the component, the module, or the unit includes a routine, a procedure, a program, a component, and a data structure that perform a specific task or implement a specific abstract data type. Further, it will be well appreciated by those skilled in the art that the methods presented by the present disclosure can be implemented by other computer system configurations including a personal computer, a handheld computing device, microprocessor-based or programmable home appliances, and others (the respective devices may operate in connection with one or more associated devices) as well as a single-processor or multi-processor computing device, a mini computer, and a main frame computer.

The embodiments described in the present disclosure may also be implemented in a distributed computing environment in which predetermined tasks are performed by remote processing devices connected through a communication network. **In** the distributed computing environment, the program module may be positioned in both local and remote memory storage devices.

The computing device generally includes various computer readable media. Media accessible by the computer may be computer readable media regardless of types thereof and the computer readable media include volatile and non-volatile media, transitory and non-transitory media, and mobile and non-mobile media. As a non-limiting example, the computer readable media may include both computer readable storage media and computer readable transmission media.

The computer readable storage media include volatile and non-volatile media, transitory and non-transitory media, and mobile and non-mobile media implemented by a predetermined method or technology for storing information such as a computer readable instruction, a data structure, a program module, or other data. The computer readable storage media include a RAM, a ROM, an EEPROM, a flash memory or other memory technologies, a CD-ROM, a digital video disk (DVD) or other optical disk storage devices, a magnetic cassette, a magnetic tape, a magnetic disk storage device or other magnetic storage devices or predetermined other media which may be accessed by the computer or may be used to store desired information, but are not limited thereto.

The computer readable transmission media generally implement the computer readable instruction, the data structure, the program module, or other data in a carrier wave or a modulated data signal such as other transport mechanism and include all information transfer media. The term "modulated data signal" means a signal acquired by setting or changing at least one of characteristics of the signal so as to encode information in the signal. As a non-limiting example, the computer readable transmission media include wired media such as a wired network or a direct-wired connection and wireless media such as acoustic, RF, infrared and other wireless media. A combination of any media among the aforementioned media is also included in a range of the computer readable transmission media.

An exemplary environment 2000 that implements various aspects of the present disclosure including a computer 2002 is shown and the computer 2002 includes a processing device 2004, a system memory 2006, and a system bus 2008. The computer 200 in the present disclosure may be used intercompatibly with the computer device 100. The system bus 2008 connects system components including the system memory 2006 (not limited thereto) to the processing device 2004. The processing device 2004 may be a predetermined processor among various commercial processors. A dual processor and other multi-processor architectures may also be used as the processing device 2004.

The system bus 2008 may be any one of several types of bus structures which may be additionally interconnected to a local bus using any one of a memory bus, a peripheral device bus, and various commercial bus architectures. The system memory 2006 includes a read only memory (ROM) 2010 and a random access memory (RAM) 2012. A basic input/output system (BIOS) is stored in the non-volatile memories 2010 including the ROM, the EPROM, the EEPROM, and the like and the BIOS includes a basic routine that assists in transmitting information among components in the computer 2002 at a time such as in-starting. The RAM 2012 may also include a high-speed RAM including a static RAM for caching data, and the like.

The computer 2002 also includes an internal hard disk drive (HDD) 2014 (for example, EIDE and SATA), a magnetic floppy disk drive (FDD) 2016 (for example, for reading from or writing in a mobile diskette 2018), SSD and an optical disk drive 2020 (for example, for reading a CD-ROM disk 2022 or reading from or writing in other high-capacity optical media such as the DVD). The hard disk drive 2014, the magnetic disk drive 2016, and the optical disk drive 2020 may be connected to the system bus 2008 by a hard disk drive interface 2024, a magnetic disk drive interface 2026, and an optical drive interface 2028, respectively. An interface 2024 for implementing an exterior drive includes at least one of a universal serial bus (USB) and an IEEE 1394 interface technology or both of them.

The drives and the computer readable media associated therewith provide non-volatile storage of the data, the data structure, the computer executable instruction, and others. In the case of the computer 2002, the drives and the media correspond to storing of predetermined data in an appropriate digital format. In the description of the computer readable storage media, the mobile optical media such as the HDD, the mobile magnetic disk, and the CD or the DVD are mentioned, but it will be well appreciated by those skilled in the art that other types of storage media readable by the computer such as a zip drive, a magnetic cassette, a flash memory card, a cartridge, and others may also be used in an exemplary operating environment and further, the predetermined media may include computer executable commands for executing the methods of the present disclosure.

Multiple program modules including an operating system 2030, one or more application programs 2032, other program module 2034, and program data 2036 may be stored in the drive and the RAM 2012. All or some of the operating system, the application, the module, and/or the data may also be cached in the RAM 2012. It will be well appreciated that the present disclosure may be implemented in operating systems which are commercially usable or a combination of the operating systems.

A user may input instructions and information in the computer 2002 through one or more wired/wireless input devices, for example, pointing devices such as a keyboard 2038 and a mouse 2040. Other input devices (not illustrated) may include a microphone, an IR remote controller, a joystick, a game pad, a stylus pen, a touch screen, and others. These and other input devices are often connected to the processing device 2004 through an input device interface 2042 connected to the system bus 2008, but may be connected by other interfaces including a parallel port, an IEEE 1394 serial port, a game port, a USB port, an IR interface, and others.

A monitor 2044 or other types of display devices are also connected to the system bus 2008 through interfaces such as a video adapter 2046, and the like. In addition to the monitor 2044, the computer generally includes a speaker, a printer, and other peripheral output devices (not illustrated).

The computer 2002 may operate in a networked environment by using a logical connection to one or more remote computers including remote computer(s) 2048 through wired and/or wireless communication. The remote computer(s) 2048 may be a workstation, a server computer, a router, a personal computer, a portable computer, a micro-processor based entertainment apparatus, a peer device, or other general network nodes and generally includes multiple components or all of the components described with respect to the computer 2002, but only a memory storage device 2050 is illustrated for brief description. The illustrated logical connection includes a wired/wireless connection to a local area network (LAN) 2052 and/or a larger network, for example, a wide area network (WAN) 2054. The LAN and WAN networking environments are general environments in offices and companies and facilitate an enterprise-wide computer network such as Intranet, and all of them may be connected to a worldwide computer network, for example, the Internet.

When the computer 2002 is used in the LAN networking environment, the computer 2002 is connected to a local network 2052 through a wired and/or wireless communication network interface or an adapter 2056. The adapter 2056 may facilitate the wired or wireless communication to the LAN 2052 and the LAN 2052 also includes a wireless access point installed therein in order to communicate with the wireless adapter 2056. When the computer 2002 is used in the WAN networking environment, the computer 2002 may include a modem 2058, is connected to a communication server on the WAN 2054, or has other means that configure communication through the WAN 2054 such as the Internet, etc. The modem 2058 which may be an internal or external and wired or wireless device is connected to the system bus 2008 through the serial port interface 2042. In the networked environment, the program modules described with respect to the computer 2002 or some thereof may be stored in the remote memory/storage device 2050. It will be well known that an illustrated network connection is exemplary and other means configuring a communication link among computers may be used.

The computer 2002 performs an operation of communicating with predetermined wireless devices or entities which are disposed and operated by the wireless communication, for example, the printer, a scanner, a desktop and/or a portable computer, a portable data assistant (PDA), a communication satellite, predetermined equipment or place associated with a wireless detectable tag, and a telephone. This at least includes wireless fidelity (Wi-Fi) and Bluetooth wireless technology. Accordingly, communication may be a predefined structure like the network in the related art or just ad hoc communication between at least two devices.

## Claims

1. A method for optimizing an artificial intelligence model, which is performed by a computing device, the method comprising:
obtaining (805a) model information corresponding to the artificial intelligence model, and obtaining (805b) target device information corresponding to a target device in which the model is to be executed;
obtaining (810) first blocks corresponding to the model by grouping first operators corresponding to the model in units of a block including a set of one or more operators based on the model information;
changing (830) the first blocks corresponding to the model to second blocks corresponding to the model and the target device, by replacing, by units of an operator, at least one of the first operators, which is included in one of the first blocks and not supported by the target device, with a replacement operator supported by the target device, wherein the second blocks contain operators that are supported by the target device; and
performing optimization of the model to correspond to the target device based on the second blocks,
wherein the performing optimization of the model based on the second blocks includes:
replacing (845), by units of a block, at least one of the second blocks with at least one candidate block from a block pool, based on a performance comparison between the at least one candidate block-selected from the block pool using the target device information as a filtering criterion-and the second blocks, ensuring that the better-performing block is used.

2. The method of claim 1,
wherein at least one of the second blocks is replaced with at least one candidate block from the block pool when it is determined that constraint is not satisfied,
wherein determining whether the constraint is satisfied includes evaluating whether at least one of a first constraint corresponding to the target device or a second constraint set by a user is met when the model constituted by the second blocks is executed on the target device.

3. The method of claim 1, further comprising
performing quantization (875) on the AI model without replacing the second blocks when it is determined that the constraint is satisfied.

4. The method of any previous claim, wherein each of the first blocks and the second blocks has a structure including a node indicating the operator and an edge indicating a connection between operators.

5. The method of any previous claim, wherein the obtaining the first blocks includes determining first blocks for covering the first operators corresponding to the model information, among blocks in a block pool including a reference block corresponding to a set of predefined operators and a custom block corresponding to a set of operators according to user definition, and
one block among the first blocks corresponds to a subset of the first operators.

6. The method of any previous claim, wherein the replacing one of the first operators with the replacement operator includes:
determining an operator type of the operator included in the second operators among the first operators, and
changing the operator to the replacement operator by using one change algorithm of a first change algorithm changing an operator by using similarity decision of an output value to an input value based on the determined operator type, a second change algorithm changing an operator based on whether mathematical results of operations coincide with each other, or a third change algorithm changing an operator based on similarity of mathematical results of operations.

7. The method of any previous claim, wherein the at least one candidate block is selected further using the model information along with the target device information,
wherein the block pool includes at least one of a reference block corresponding to a set of predefined operators or a custom block corresponding to a set of operators according to user definition.

8. The method of any previous claim, wherein the filtering criterion includes:
a first filtering criterion for determining a block having an input size or an output size corresponding to an input size or an output size of each of the second blocks constituting the model as the candidate block, and
a second filtering criterion for determining a block constituted only by operators supported in the target device as the candidate block.

9. The method of any previous claim, wherein the performance comparison between the at least one candidate block and the second blocks includes a comparison between first performance of the candidate block in the target device and second performance of the second blocks in the target device.

10. The method of claim 9, wherein the first performance and the second performance include at least one of block latency measured or expected by the target device, block accuracy measured or expected by the target device, or block power consumption measured or expected by the target device.

11. The method of any previous claim, wherein the performing the optimization of the model to correspond to the target device further includes:
determining at least one candidate block based on target device awareness obtained from the target device information,
determining whether to change at least one of the second blocks to the candidate block, by comparing scores of the at least one candidate block and the second blocks, and
performing the optimization of the model to correspond to the target device based on the determining of whether to change at least one of the second blocks to the candidate block, and
wherein the method further comprises performing retraining for the model by applying feature-level knowledge distillation loss for a block changed to the candidate block among the second blocks.

12. The method of any one of claims 1-2 and 4-11, wherein the performing the optimization of the model to correspond to the target device includes quantizing the model by using a scheme of changing an operator to at least one of a floating point type or an integer type, and
the quantizing includes:
determining whether each of blocks to be optimized supports mixed precision, and
maintaining an operator in which a quantization error is a first value to have a floating point type and performing quantization to an integer type for an operator in which the quantization error is a second value in the block supporting the mixed precision, and
wherein the first value is larger than the second value.

13. The method of any previous claim, further comprising:
converting the optimized model to have a runtime supportable by the target device;
obtaining a benchmark result generated by executing the converted optimized model in the target device;
determining whether the benchmark result satisfies at least one constraint of a first constraint corresponding to the target device or a second constraint set by a user; and
determining reperforming of the optimizing of the model to correspond to the target device when it is determined that the benchmark result does not satisfy the at least one constraint.

14. A non-transitory computer-readable medium comprising a computer program, wherein when the computer program is executed by at least one processor, the computer program allows at least one processor to perform operations for optimizing an artificial intelligence based model, and the operations comprise:
obtaining model information corresponding to the artificial intelligence model, and obtaining target device information corresponding to a target device in which the model is to be executed;
obtaining first blocks corresponding to the model by grouping first operators corresponding to the model in units of a block including a set of one or more operators based on the model information;
changing the first blocks corresponding to the model to second blocks corresponding to the model and the target device, by replacing, by units of an operator, at least one of the first operators, which is included in one of the first blocks and not supported by the target device, with a replacement operator supported by the target device, wherein the second blocks contain operators that are supported by the target device; and
performing optimization of the model to correspond to the target device based on the second blocks,
wherein the performing optimization of the model based on the second blocks includes:
replacing, by units of a block, at least one of the second blocks with at least one candidate block from a block pool, based on a performance comparison between the at least one candidate block-selected from the block pool using the target device information as a filtering criterion-and the second blocks, ensuring that the better-performing block is used.

15. A computing device comprising:
at least one processor (110); and
a memory (130),
wherein the at least one processor is configured to perform:
an operation of obtaining model information corresponding to the artificial intelligence model, and obtaining target device information corresponding to a target device in which the model is to be executed;
an operation of obtaining first blocks corresponding to the model by grouping first operators corresponding to the model in units of a block including a set of one or more operators based on the model information;
an operation of changing the first blocks corresponding to the model to second blocks corresponding to the model and the target device, by replacing, by units of an operator, at least one of the first operators, which is included in one of the first blocks and not supported by the target device, with a replacement operator supported by the target device, wherein the second blocks contain operators that are supported by the target device; and
an operation of performing optimization of the model to correspond to the target device based on the second blocks,
wherein the performing optimization of the model based on the second blocks includes:
an operation of replacing, by units of a block, at least one of the second blocks with at least one candidate block from a block pool, based on a performance comparison between the at least one candidate block-selected from the block pool using the target device information as a filtering criterion-and the second blocks, ensuring that the better-performing block is used.

## Patentansprüche

1. Verfahren zum Optimieren eines Modells künstlicher Intelligenz, das durch eine Recheneinrichtung durchgeführt wird, wobei das Verfahren Folgendes umfasst:
Erlangen (805a) von Modellinformationen, die dem Modell künstlicher Intelligenz entsprechen, und Erlangen (805b) von Zieleinrichtungsinformationen, die einer Zieleinrichtung entsprechen, in der das Modell auszuführen ist;
Erlangen (810) erster Blöcke, die dem Modell entsprechen, durch Gruppieren erster Operatoren, die dem Modell entsprechen, in Einheiten eines Blocks, der einen Satz von einem oder mehreren Operatoren enthält, basierend auf den Modellinformationen;
Ändern (830) der ersten Blöcke, die dem Modell entsprechen, in zweite Blöcke, die dem Modell und der Zieleinrichtung entsprechen, durch Ersetzen mindestens eines der ersten Operatoren, der in einem der ersten Blöcke enthalten ist und nicht durch die Zieleinrichtung unterstützt wird, nach Einheiten eines Operators, durch einen durch die Zieleinrichtung unterstützten Ersatzoperator, wobei die zweiten Blöcke Operatoren enthalten, die durch die Zieleinrichtung unterstützt werden; und
Durchführen einer Optimierung des Modells, sodass es der Zieleinrichtung entspricht, basierend auf den zweiten Blöcken,
wobei das Durchführen einer Optimierung des Modells basierend auf den zweiten Blöcken Folgendes enthält:
Ersetzen (845), nach Einheiten eines Blocks, mindestens eines der zweiten Blöcke durch mindestens einen Kandidatenblock aus einem Blockpool, basierend auf einem Leistungsvergleich zwischen dem mindestens einen Kandidatenblock - ausgewählt aus dem Blockpool unter Verwendung der Zieleinrichtungsinformationen als Filterkriterium - und den zweiten Blöcken, wodurch sichergestellt wird, dass der leistungsfähigere Block verwendet wird.

2. Verfahren nach Anspruch 1,
wobei mindestens einer der zweiten Blöcke durch mindestens einen Kandidatenblock aus dem Blockpool ersetzt wird, wenn bestimmt wird, dass die Bedingung nicht erfüllt ist,
wobei das Bestimmen, ob die Bedingung erfüllt ist, Bewerten enthält, ob mindestens eine von einer ersten Bedingung, die der Zieleinrichtung entspricht, oder einer zweiten Bedingung, die durch einen Benutzer festgelegt ist, erfüllt ist, wenn das Modell, das durch die zweiten Blöcke gebildet ist, auf der Zieleinrichtung ausgeführt wird.

3. Verfahren nach Anspruch 1, ferner Folgendes umfassend
Durchführen einer Quantisierung (875) an dem KI-Modell, ohne die zweiten Blöcke zu ersetzen, wenn bestimmt wird, dass die Bedingung erfüllt ist.

4. Verfahren nach einem vorhergehenden Anspruch, wobei jeder der ersten Blöcke und der zweiten Blöcke eine Struktur aufweist, die einen Knoten, der den Operator angibt, und eine Kante, die eine Verbindung zwischen Operatoren angibt, enthält.

5. Verfahren nach einem vorhergehenden Anspruch, wobei das Erlangen der ersten Blöcke Bestimmen erster Blöcke zum Abdecken der ersten Operatoren, die den Modellinformationen entsprechen, unter Blöcken in einem Blockpool, der einen Referenzblock, der einem Satz vordefinierter Operatoren entspricht, und einen benutzerspezifischen Block enthält, der einem Satz von Operatoren gemäß einer Benutzerdefinition entspricht, enthält und
ein Block unter den ersten Blöcken einer Teilmenge der ersten Operatoren entspricht.

6. Verfahren nach einem vorhergehenden Anspruch, wobei das Ersetzen eines der ersten Operatoren durch den Ersatzoperator Folgendes enthält:
Bestimmen eines Operatortyps des Operators, der in den zweiten Operatoren enthalten ist, unter den ersten Operatoren, und
Ändern des Operators in den Ersatzoperator unter Verwendung eines Änderungsalgorithmus von einem ersten Änderungsalgorithmus, der einen Operator unter Verwendung einer Ähnlichkeitsentscheidung eines Ausgabewerts in einen Eingabewert basierend auf dem bestimmten Operatortyp ändert, einem zweiten Änderungsalgorithmus, der einen Operator basierend darauf ändert, ob mathematische Ergebnisse von Operationen miteinander übereinstimmen, oder einem dritten Änderungsalgorithmus, der einen Operator basierend auf einer Ähnlichkeit von mathematischen Ergebnissen von Operationen ändert.

7. Verfahren nach einem vorhergehenden Anspruch, wobei der mindestens eine Kandidatenblock ferner unter Verwendung der Modellinformationen zusammen mit den Zieleinrichtungsinformationen ausgewählt wird,
wobei der Blockpool mindestens einen von einem Referenzblock, der einem Satz vordefinierter Operatoren entspricht, oder einem benutzerspezifischen Block, der einem Satz von Operatoren gemäß einer Benutzerdefinition entspricht, enthält.

8. Verfahren nach einem vorhergehenden Anspruch, wobei das Filterkriterium Folgendes enthält:
ein erstes Filterkriterium zum Bestimmen eines Blocks mit einer Eingabegröße oder einer Ausgabegröße, die einer Eingabegröße oder einer Ausgabegröße jedes der zweiten Blöcke, die das Modell bilden, entspricht, als Kandidatenblock und
ein zweites Filterkriterium zum Bestimmen eines Blocks, der nur aus Operatoren gebildet wird, die in der Zieleinrichtung unterstützt werden, als Kandidatenblock.

9. Verfahren nach einem vorhergehenden Anspruch, wobei der Leistungsvergleich zwischen dem mindestens einen Kandidatenblock und den zweiten Blöcken einen Vergleich zwischen der ersten Leistung des Kandidatenblocks in der Zieleinrichtung und der zweiten Leistung der zweiten Blöcke in der Zieleinrichtung enthält.

10. Verfahren nach Anspruch 9, wobei die erste Leistung und die zweite Leistung mindestens eines von einer Blocklatenz, die durch die Zieleinrichtung gemessen oder erwartet wird, einer Blockgenauigkeit, die durch die Zieleinrichtung gemessen oder erwartet wird, oder einem Blockleistungsverbrauch, der durch die Zieleinrichtung gemessen oder erwartet wird, enthalten.

11. Verfahren nach einem vorhergehenden Anspruch, wobei das Durchführen der Optimierung des Modells, sodass es der Zieleinrichtung entspricht, ferner Folgendes enthält:
Bestimmen mindestens eines Kandidatenblocks basierend auf einer Zieleinrichtungswahrnehmung, die aus den Zieleinrichtungsinformationen erlangt wird,
Bestimmen, ob mindestens einer der zweiten Blöcke in den Kandidatenblock zu ändern ist, durch Vergleichen von Punktwerten des mindestens einen Kandidatenblocks und der zweiten Blöcke und
Durchführen der Optimierung des Modells, sodass es der Zieleinrichtung entspricht, basierend auf dem Bestimmen, ob mindestens einer der zweiten Blöcke in den Kandidatenblock zu ändern ist, und
wobei das Verfahren ferner Durchführen eines erneuten Trainierens für das Modell durch Anwenden von Wissensdestillationsverlust auf Merkmalsebene für einen Block unter den zweiten Blöcken, der in den Kandidatenblock geändert wurde, umfasst.

12. Verfahren nach einem der Ansprüche 1-2 und 4-11, wobei das Durchführen der Optimierung des Modells, sodass es der Zieleinrichtung entspricht, Quantisieren des Modells unter Verwendung eines Schemas zum Ändern eines Operators in mindestens eines von einem Fließkommatyp oder einem ganzzahligen Typ enthält und
das Quantisieren Folgendes enthält:
Bestimmen, ob jeder der zu optimierenden Blöcke eine gemischte Präzision unterstützt, und
Beibehalten eines Operators, in dem ein Quantisierungsfehler ein erster Wert ist, um einen Fließkommatyp zu haben, und Durchführen einer Quantisierung auf einen ganzzahligen Typ für einen Operator, in dem der Quantisierungsfehler ein zweiter Wert in dem Block ist, der die gemischte Präzision unterstützt, und
wobei der erste Wert größer ist als der zweite Wert.

13. Verfahren nach einem vorhergehenden Anspruch, ferner umfassend:
Umwandeln des optimierten Modells, sodass es eine Laufzeit aufweist, die durch die Zieleinrichtung unterstützbar ist;
Erlangen eines Benchmark-Ergebnisses, das durch Ausführen des umgewandelten optimierten Modells in der Zieleinrichtung erzeugt wird;
Bestimmen, ob das Benchmark-Ergebnis mindestens eine Bedingung von einer ersten Bedingung, die der Zieleinrichtung entspricht, oder einer zweiten Bedingung, die durch einen Benutzer festgelegt ist, erfüllt; und
Bestimmen eines erneuten Durchführens des Optimierens des Modells, sodass es der Zieleinrichtung entspricht, wenn bestimmt wird, dass das Benchmark-Ergebnis die mindestens eine Bedingung nicht erfüllt.

14. Nicht flüchtiges computerlesbares Medium, umfassend ein Computerprogramm, wobei, wenn das Computerprogramm durch mindestens einen Prozessor ausgeführt wird, das Computerprogramm mindestens einem Prozessor ermöglicht, Operationen zum Optimieren eines Modells auf Basis künstlicher Intelligenz durchzuführen, und die Operationen Folgendes umfassen:
Erlangen von Modellinformationen, die dem Modell künstlicher Intelligenz entsprechen, und Erlangen von Zieleinrichtungsinformationen, die einer Zieleinrichtung entsprechen, in der das Modell auszuführen ist;
Erlangen erster Blöcke, die dem Modell entsprechen, durch Gruppieren erster Operatoren, die dem Modell entsprechen, in Einheiten eines Blocks, der einen Satz von einem oder mehreren Operatoren enthält, basierend auf den Modellinformationen;
Ändern der ersten Blöcke, die dem Modell entsprechen, in zweite Blöcke, die dem Modell und der Zieleinrichtung entsprechen, durch Ersetzen mindestens eines der ersten Operatoren, der in einem der ersten Blöcke enthalten ist und nicht durch die Zieleinrichtung unterstützt wird, nach Einheiten eines Operators, durch einen durch die Zieleinrichtung unterstützten Ersatzoperator, wobei die zweiten Blöcke Operatoren enthalten, die durch die Zieleinrichtung unterstützt werden; und
Durchführen einer Optimierung des Modells, sodass es der Zieleinrichtung entspricht, basierend auf den zweiten Blöcken,
wobei das Durchführen einer Optimierung des Modells basierend auf den zweiten Blöcken Folgendes enthält:
Ersetzen, nach Einheiten eines Blocks, mindestens eines der zweiten Blöcke durch mindestens einen Kandidatenblock aus einem Blockpool, basierend auf einem Leistungsvergleich zwischen dem mindestens einen Kandidatenblock - ausgewählt aus dem Blockpool unter Verwendung der Zieleinrichtungsinformationen als Filterkriterium - und den zweiten Blöcken, wodurch sichergestellt wird, dass der leistungsfähigere Block verwendet wird.

15. Recheneinrichtung, umfassend:
mindestens einen Prozessor (110); und
einen Speicher (130),
wobei der mindestens eine Prozessor dazu konfiguriert ist, Folgendes durchzuführen:
eine Operation zum Erlangen von Modellinformationen, die dem Modell künstlicher Intelligenz entsprechen, und Erlangen von Zieleinrichtungsinformationen, die einer Zieleinrichtung entsprechen, in der das Modell auszuführen ist;
eine Operation zum Erlangen erster Blöcke, die dem Modell entsprechen, durch Gruppieren erster Operatoren, die dem Modell entsprechen, in Einheiten eines Blocks, der einen Satz von einem oder mehreren Operatoren enthält, basierend auf den Modellinformationen;
eine Operation zum Ändern der ersten Blöcke, die dem Modell entsprechen, in zweite Blöcke, die dem Modell und der Zieleinrichtung entsprechen, durch Ersetzen mindestens eines der ersten Operatoren, der in einem der ersten Blöcke enthalten ist und nicht durch die Zieleinrichtung unterstützt wird, nach Einheiten eines Operators, durch einen durch die Zieleinrichtung unterstützten Ersatzoperator, wobei die zweiten Blöcke Operatoren enthalten, die durch die Zieleinrichtung unterstützt werden; und
eine Operation zum Durchführen einer Optimierung des Modells, sodass es der Zieleinrichtung entspricht, basierend auf den zweiten Blöcken,
wobei das Durchführen einer Optimierung des Modells basierend auf den zweiten Blöcken Folgendes enthält:
eine Operation zum Ersetzen, nach Einheiten eines Blocks, mindestens eines der zweiten Blöcke durch mindestens einen Kandidatenblock aus einem Blockpool, basierend auf einem Leistungsvergleich zwischen dem mindestens einen Kandidatenblock - ausgewählt aus dem Blockpool unter Verwendung der Zieleinrichtungsinformationen als Filterkriterium - und den zweiten Blöcken, wodurch sichergestellt wird, dass der leistungsfähigere Block verwendet wird.

## Revendications

1. Procédé d'optimisation d'un modèle d'intelligence artificielle, qui est réalisé par un dispositif informatique, le procédé comprenant :
l'obtention (805a) d'informations de modèle correspondant au modèle d'intelligence artificielle, et l'obtention (805b) d'informations de dispositif cible correspondant à un dispositif cible où le modèle doit être exécuté ;
l'obtention (810) de premiers blocs correspondant au modèle en regroupant des premiers opérateurs correspondant au modèle en unités d'un bloc comprenant un ensemble d'un ou plusieurs opérateurs sur la base des informations de modèle ;
la transformation (830) des premiers blocs correspondant au modèle en seconds blocs correspondant au modèle et au dispositif cible, en remplaçant, à l'aide d'unités d'un opérateur, au moins l'un des premiers opérateurs, qui est compris dans l'un des premiers blocs et non pris en charge par le dispositif cible, par un opérateur de remplacement pris en charge par le dispositif cible, dans lequel les seconds blocs contiennent des opérateurs pris en charge par le dispositif cible ; et
la réalisation d'une optimisation du modèle pour correspondre au dispositif cible sur la base des seconds blocs,
dans lequel la réalisation de l'optimisation du modèle sur la base des seconds blocs comprend :
le remplacement (845), à l'aide d'unités d'un bloc, d'au moins un des seconds blocs par au moins un bloc candidat à partir d'un bassin de blocs, sur la base d'une comparaison de performance entre ledit au moins un bloc candidat, sélectionné à partir du bassin de blocs en utilisant les informations de dispositif cible en tant que critère de filtrage, et les seconds blocs, garantissant que le bloc le plus performant est utilisé.

2. Procédé de la revendication 1,
dans lequel au moins l'un des seconds blocs est remplacé par au moins un bloc candidat du bassin de blocs lorsqu'il est déterminé que la contrainte n'est pas satisfaite,
dans lequel la détermination du fait que la contrainte est satisfaite comprend l'évaluation du fait qu'au moins l'une parmi une première contrainte correspondant au dispositif cible ou une seconde contrainte définie par un utilisateur est remplie ou non lorsque le modèle constitué par les seconds blocs est exécuté sur le dispositif cible.

3. Procédé de la revendication 1, comprenant en outre :
la réalisation d'une quantification (875) sur le modèle d'IA sans remplacer les seconds blocs lorsqu'il est déterminé que la contrainte est satisfaite.

4. Procédé d'une quelconque revendication précédente, dans lequel chacun des premiers blocs et des seconds blocs présente une structure comprenant un nœud indiquant l'opérateur et un bord indiquant une connexion entre des opérateurs.

5. Procédé d'une quelconque revendication précédente, dans lequel l'obtention des premiers blocs comprend la détermination de premiers blocs pour couvrir les premiers opérateurs correspondant aux informations de modèle, parmi des blocs dans un bassin de blocs comprenant un bloc de référence correspondant à un ensemble d'opérateurs prédéfinis et un bloc personnalisé correspondant à un ensemble d'opérateurs selon une définition d'utilisateur, et
un bloc parmi les premiers blocs correspond à un sous-ensemble des premiers opérateurs.

6. Procédé d'une quelconque revendication précédente, dans lequel le remplacement de l'un des premiers opérateurs par l'opérateur de remplacement comprend :
la détermination d'un type d'opérateur de l'opérateur compris dans les seconds opérateurs parmi les premiers opérateurs, et
la transformation de l'opérateur en opérateur de remplacement en utilisant un algorithme de transformation parmi un premier algorithme de transformation transformant un opérateur en utilisant une décision de similarité d'une valeur de sortie à une valeur d'entrée sur la base du type d'opérateur déterminé, un deuxième algorithme de transformation transformant un opérateur sur la base du fait que des résultats mathématiques des opérations coïncident les uns avec les autres, ou un troisième algorithme de transformation transformant un opérateur sur la base d'une similarité des résultats mathématiques des opérations.

7. Procédé d'une quelconque revendication précédente, dans lequel ledit au moins un bloc candidat est sélectionné en outre en utilisant les informations de modèle avec les informations de dispositif cible,
dans lequel le bassin de blocs comprend au moins un bloc de référence correspondant à un ensemble d'opérateurs prédéfinis ou un bloc personnalisé correspondant à un ensemble d'opérateurs selon une définition d'utilisateur.

8. Procédé d'une quelconque revendication précédente, dans lequel le critère de filtrage comprend :
un premier critère de filtrage pour déterminer un bloc présentant une taille d'entrée ou une taille de sortie correspondant à une taille d'entrée ou à une taille de sortie de chacun des seconds blocs constituant le modèle en tant que bloc candidat, et
un second critère de filtrage pour déterminer un bloc constitué uniquement d'opérateurs pris en charge dans le dispositif cible en tant que bloc candidat.

9. Procédé d'une quelconque revendication précédente, dans lequel la comparaison de performance entre ledit au moins un bloc candidat et les seconds blocs comprend une comparaison entre une première performance du bloc candidat dans le dispositif cible et une seconde performance des seconds blocs dans le dispositif cible.

10. Procédé de la revendication 9, dans lequel la première performance et la seconde performance comprennent au moins un élément parmi une latence de bloc mesurée ou attendue par le dispositif cible, une précision de bloc mesurée ou attendue par le dispositif cible, ou une consommation d'énergie de bloc mesurée ou attendue par le dispositif cible.

11. Procédé d'une quelconque revendication précédente, dans lequel la réalisation de l'optimisation du modèle pour correspondre au dispositif cible comprend en outre :
la détermination d'au moins un bloc candidat sur la base d'une reconnaissance de dispositif cible obtenue à partir des informations du dispositif cible,
la détermination du fait de transformer ou non au moins l'un des seconds blocs en bloc candidat, en comparant des scores de l'au moins un bloc candidat et des seconds blocs, et
la réalisation de l'optimisation du modèle pour correspondre au dispositif cible sur la base de la détermination du fait de transformer ou non au moins un des seconds blocs en bloc candidat, et
dans lequel le procédé comprend en outre la réalisation d'un ré-entraînement pour le modèle en appliquant une perte de distillation de connaissances de niveau caractéristique pour un bloc transformé en bloc candidat parmi les seconds blocs.

12. Procédé de l'une quelconque des revendications 1 ou 2 et 4 à 11, dans lequel la réalisation de l'optimisation du modèle pour correspondre au dispositif cible comprend la quantification du modèle en utilisant un schéma de transformation d'un opérateur en au moins l'un d'un type à virgule flottante ou d'un type entier, et
la quantification comprend :
la détermination du fait que chacun des blocs à optimiser prend ou non en charge une précision mixte, et
le maintien d'un opérateur où une erreur de quantification est une première valeur pour présenter un type à virgule flottante et la réalisation d'une quantification à un type entier pour un opérateur où l'erreur de quantification est une seconde valeur dans le bloc prenant en charge la précision mixte, et
dans lequel la première valeur est supérieure à ladite seconde valeur.

13. Procédé d'une quelconque revendication précédente, comprenant en outre :
la conversion du modèle optimisé pour présenter une durée d'exécution pouvant être prise en charge par le dispositif cible ;
l'obtention d'un résultat de référence généré en exécutant le modèle optimisé converti dans le dispositif cible ;
la détermination du fait que le résultat du résultat de référence satisfait ou non au moins une contrainte parmi une première contrainte correspondant au dispositif cible ou une seconde contrainte définie par un utilisateur ; et
la détermination de la re-réalisation de l'optimisation du modèle pour correspondre au dispositif cible lorsqu'il est déterminé que le résultat de référence ne satisfait pas l'au moins une contrainte.

14. Support non transitoire lisible par ordinateur comprenant un programme informatique, dans lequel, lorsque le programme informatique est exécuté par au moins un processeur, le programme informatique permet à au moins un processeur de réaliser des opérations pour optimiser un modèle basé sur l'intelligence artificielle, et les opérations comprennent
l'obtention d'informations de modèle correspondant au modèle d'intelligence artificielle, et l'obtention d'informations de dispositif cible correspondant à un dispositif cible où le modèle doit être exécuté ;
l'obtention de premiers blocs correspondant au modèle en regroupant des premiers opérateurs correspondant au modèle en unités d'un bloc comprenant un ensemble d'un ou plusieurs opérateurs sur la base des informations de modèle ;
la transformation des premiers blocs correspondant au modèle en seconds blocs correspondant au modèle et au dispositif cible, en remplaçant, à l'aide d'unités d'un opérateur, au moins l'un des premiers opérateurs, qui est compris dans l'un des premiers blocs et non pris en charge par le dispositif cible, par un opérateur de remplacement pris en charge par le dispositif cible, dans lequel les seconds blocs contiennent des opérateurs pris en charge par le dispositif cible ; et
la réalisation d'une optimisation du modèle pour correspondre au dispositif cible sur la base des seconds blocs,
dans lequel la réalisation de l'optimisation du modèle sur la base des seconds blocs comprend :
le remplacement, à l'aide d'unités d'un bloc, d'au moins un des seconds blocs par au moins un bloc candidat à partir d'un bassin de blocs, sur la base d'une comparaison de performance entre ledit au moins un bloc candidat, sélectionné à partir du bassin de blocs en utilisant les informations de dispositif cible en tant que critère de filtrage, et les seconds blocs, garantissant que le bloc le plus performant est utilisé.

15. Dispositif informatique comprenant :
au moins un processeur (110) ; et
une mémoire (130),
dans lequel l'au moins un processeur est configuré pour réaliser :
une opération d'obtention d'informations de modèle correspondant au modèle d'intelligence artificielle, et l'obtention d'informations de dispositif cible correspondant à un dispositif cible où le modèle doit être exécuté ;
une opération d'obtention de premiers blocs correspondant au modèle en regroupant des premiers opérateurs correspondant au modèle en unités d'un bloc comprenant un ensemble d'un ou plusieurs opérateurs sur la base des informations de modèle ;
une opération de transformation des premiers blocs correspondant au modèle en seconds blocs correspondant au modèle et au dispositif cible, en remplaçant, à l'aide d'unités d'un opérateur, au moins l'un des premiers opérateurs, qui est compris dans l'un des premiers blocs et non pris en charge par le dispositif cible, par un opérateur de remplacement pris en charge par le dispositif cible, dans lequel les seconds blocs contiennent des opérateurs pris en charge par le dispositif cible ; et
une opération de réalisation d'une optimisation du modèle pour correspondre au dispositif cible sur la base des seconds blocs,
dans lequel la réalisation d'une optimisation du modèle sur la base des seconds blocs comprend : une opération de remplacement, à l'aide d'unités d'un bloc, d'au moins un des seconds blocs par au moins un bloc candidat à partir d'un bassin de blocs, sur la base d'une comparaison de performance entre ledit au moins un bloc candidat, sélectionné à partir du bassin de blocs en utilisant les informations de dispositif cible en tant que critère de filtrage, et les seconds blocs, garantissant que le bloc le plus performant est utilisé.
